# EUROPEAN PATENT SPECIFICATION

(11) **EP 3 404 059 B1**
(45) Date of publication and mention of the grant of the patent: **01.03.2023**
(21) Application number: 17738549.9
(22) Date of filing: 13.01.2017
(51) Int. Cl.: C09J 5/02, B29C 65/48, B32B 27/00, B32B 7/12

(54) **METHOD FOR MANUFACTURING SURFACE-MODIFIED THERMOPLASTIC RESIN**
VERFAHREN ZUR HERSTELLUNG VON OBERFLÄCHENMODIFIZIERTEM THERMOPLASTISCHEM HARZ
PROCÉDÉ DE FABRICATION D'UNE RÉSINE THERMOPLASTIQUE MODIFIÉE EN SURFACE

(30) Priority: 14.01.2016 JP 2016005006
(43) Date of publication of application: 21.11.2018
(73) Proprietor: Nitto Denko Corporation, Ibaraki-shi, Osaka 567-8680 (JP)
(72) Inventor: OKADA, Kenichi, Ibaraki-shi Osaka 567-8680 (JP); SHIMOKITA, Keisuke, Ibaraki-shi Osaka 567-8680 (JP); TANAKA, Akiko, Ibaraki-shi Osaka 567-8680 (JP); FUNATSU, Eriko, Ibaraki-shi Osaka 567-8680 (JP); GOMI, Asuka, Ibaraki-shi Osaka 567-8680 (JP); SHIMAZU, Akira, Ibaraki-shi Osaka 567-8680 (JP)
(74) Representative: Müller-Boré & Partner Patentanwälte PartG mbB
(86) International application number: PCT/JP2017/001066
(87) International publication number: WO 2017/122797

(56) References cited:
- EP-A2- 0 320 155
- WO-A1-2008/075461
- WO-A2-2007/075724
- JP-A- H 021 303
- JP-A- H0 797 465
- JP-A- H1 120 103
- JP-A- 2000 223 374
- JP-A- 2004 213 990
- JP-A- 2005 297 303
- JP-A- 2005 319 714
- JP-A- 2006 205 436
- JP-A- 2006 292 939
- JP-A- 2007 254 718
- JP-A- 2010 234 346
- JP-A- 2014 076 565
- JP-A- 2014 515 047
- JP-A- 2015 223 552
- US-A1- 2005 153 110

## Description

The present invention relates to a method for manufacturing a surface-modified thermoplastic resin.

In the related art, in transportation equipment such as railroad vehicles, aeroplane, ships, and vehicles, metal such as iron or aluminum is generally used as a constituent material thereof. In a case of manufacturing transportation equipment by using metal such as iron or aluminum as a constituent material, it is necessary to sufficiently bond metal such as iron or aluminum to another adherend. As such an adhesive, in the related art, a rubber epoxy-based curable resin composition is generally used (for example, see PTL 1 or the like).

In recent years, a decrease in weight of such transportation equipment is required in order to improve fuel consumption. In order to decrease in weight of transportation equipment, a decrease in weight of the constituent material thereof is an important key.

Fiber reinforced plastic (FRP) is used as a lightweight material which can be replaced with the metal such as iron or aluminum. Particularly, as the constituent material of transportation equipment, fiber reinforced thermoplastic resin (FRTP) using a thermoplastic resin as a matrix resin is used as the lightweight material, due to requirement of ease of molding or the like.

However, thermoplastic resins are hardly compatible with adhesives, and sufficient bonding strength cannot be obtained even in a case of using a general-purpose adhesive or adhesive sheet. As a usual practice for obtaining such bonding strength, a technology of applying a suitable primer solution to a surface of a thermoplastic resin (for example, see PTL 2 or the like) is provided, but in a case of a resin having high solvent resistance (for example, PPS, PA, PP, or the like), sufficient bonding strength cannot be exhibited.

In addition to the technology of applying a primer solution, various surface treatment methods such as sand blasting treatment, corona treatment, or plasma treatment are known as means for imparting sufficient bonding strength to a thermoplastic resin. However, in such surface treatment methods, a surface treatment step and a drying step are necessarily provided, and this causes a decrease in productivity.

Further, a release agent is necessarily used in a case of performing a molding process of a thermoplastic resin in a die, however, a surface of the thermoplastic resin is contaminated due to this release agent, and thus, sufficient bonding strength cannot be imparted to the thermoplastic resin. Accordingly, it is necessary to provide a washing treatment step or a polishing treatment step for removing the release agent. As a result, a problem regarding cost rise due to capital investment or running cost for performing these steps occurs.

A method for manufacturing a surface-modified thermoplastic resin is known from PTL 3.

### Patent Literature

[PTL 1] Japanese Patent No. 3229467
[PTL2] JP-A-2000-226536
[PTL 3] EP 0 320 155 A2

The invention is for solving the aforementioned problems of the related art and an object thereof is to provide a method for manufacturing a surface-modified thermoplastic resin in which sufficient bonding strength is imparted to a thermoplastic resin.

A method for manufacturing a surface-modified thermoplastic resin of the invention is a method for manufacturing a surface-modified thermoplastic resin, in which an easy adherence layer is laminated on a thermoplastic resin having a melting point of T°C, the method including: providing the easy adherence layer on at least a part of a surface of the thermoplastic resin; and performing heat welding at a temperature equal to or higher than (T - 50)°C, wherein the heat welding is performed by heating press, and wherein a molding process of the thermoplastic resin is performed by heating press.

According to the invention as claimed, the easy adherence layer is provided by placing an easy adherence layer side of a thermal transfer surface-modifying sheet that is a laminate comprising a release sheet and the easy adherence layer, on at least a part of the surface of the thermoplastic resin.

In an aspect, the release sheet is removed after the heat welding.

There is further generally described a method for manufacturing a surface-modified thermoplastic resin, in which an easy adherence layer is laminated on a thermoplastic resin, the method including: setting at least a part of the surface of the thermoplastic resin to a molten state, and then providing the easy adherence layer on a surface of the thermoplastic resin in the molten state. This method is not according to the present invention.

According to the invention as claimed, the easy adherence layer includes a polymer component, and the polymer component includes a non-polar unit and a polar unit including a polar group.

In an aspect, the polymer component is at least one kind selected from a methoxymethyl group-containing polymer, a hydroxyl group-containing polymer, a carboxyl group-containing polymer, and an amino group-containing polymer.

In an aspect, the easy adherence layer includes at least one kind selected from a tertiary amine-containing compound and a strong acid.

There is further generally described a method for manufacturing a bonded structure, in which a surface-modified thermoplastic resin (A) obtained by the manufacturing method of the invention is laminated on an adherend via an adhesive layer, the method including: providing the adhesive layer on a surface of the easy adherence layer side of the surface-modified thermoplastic resin (A) to bond the surface-modified thermoplastic resin (A) to the adherend.

In an aspect, the adhesive layer contains a component having a functional group which reacts with a polar group.

In an aspect, the adherend is a surface-modified thermoplastic resin (B) obtained by the manufacturing method of the invention, and the adhesive layer is laminated on a surface of the easy adherence layer side of the surface-modified thermoplastic resin (B) as the adherend.

In an aspect, a thermoplastic resin constituting the surface-modified thermoplastic resin (A) is different from a thermoplastic resin constituting the surface-modified thermoplastic resin (B).

There is further generally described a bonded structure including: a surface-modified thermoplastic resin in which an easy adherence layer is laminated on a thermoplastic resin; an adhesive layer; and another surface-modified thermoplastic resin in which an easy adherence layer is laminated on a thermoplastic resin, in this order, in which, in a case where tensile shear adhesiveness between both the surface-modified thermoplastic resins at a tension rate of 5 mm/min at 25°C is set as P (Pa), and tensile shear adhesiveness between both the thermoplastic resins in the bonded structure including the thermoplastic resin constituting the surface-modified thermoplastic resin, the adhesive layer, and the thermoplastic resin constituting the surface-modified thermoplastic resin, in this order, at a tension rate of 5 mm/min at 25°C is set as P0 (Pa), a relationship of P/PO > 2 is satisfied.

There is further generally described a bonded structure including: a surface-modified thermoplastic resin in which an easy adherence layer is laminated on a thermoplastic resin; an adhesive layer; and another surface-modified thermoplastic resin in which an easy adherence layer is laminated on a thermoplastic resin, in this order, in which, in a case where the bonded structure is broken by pulling the two surface-modified thermoplastic resins at a tension rate of 5 mm/min at 25°C, a fracture occurs in at least one of the adhesive layer and the two surface-modified thermoplastic resins.

There is further generally described a thermal transfer surface-modifying sheet which is a laminate comprising a release sheet and an easy adherence layer.

In an aspect, the thermal transfer surface-modifying sheet described herein is to be used in a method for manufacturing a surface-modified thermoplastic resin of the invention.

In an aspect, the easy adherence layer includes a polymer component, and the polymer component includes a non-polar unit and a polar unit including a polar group.

In the aspect, the polymer component is at least one kind selected from a methoxymethyl group-containing polymer, a hydroxyl group-containing polymer, a carboxyl group-containing polymer, and an amino group-containing polymer.

In the aspect, the easy adherence layer includes at least one kind selected from a tertiary amine-containing compound and a strong acid.

There is further generally described herein a thermoplastic resin with a thermal transfer surface-modifying sheet, in which the thermal transfer surface-modifying sheet described herein is placed on a surface of the thermoplastic resin so that an easy adherence layer side of the thermal transfer surface-modifying sheet becomes a surface side of the thermoplastic resin.

There is further generally described herein a surface-modified thermoplastic resin which is a surface-modified thermoplastic resin in which an easy adherence layer is laminated on a thermoplastic resin, the surface-modified thermoplastic resin including: a mixed layer in which the thermoplastic resin and the easy adherence layer are mixed, between the thermoplastic resin and the easy adherence layer, in which a thickness of the mixed layer is equal to or greater than 1.5 nm.

According to the invention, it is possible to provide a method for manufacturing a surface-modified thermoplastic resin in which sufficient bonding strength is imparted to a thermoplastic resin. It is possible to provide a method for manufacturing a bonded structure capable of exhibiting sufficient bonding strength, in which the surface-modified thermoplastic resin obtained by the manufacturing method described above is laminated on an adherend via an adhesive layer. It is possible to provide a bonded structure capable of exhibiting sufficient bonding strength. It is possible to provide a thermal transfer surface-modifying sheet that can be preferably used in the method for manufacturing a surface-modified thermoplastic resin. It is possible to provide a thermoplastic resin with a thermal transfer surface-modifying sheet including the thermal transfer surface-modifying sheet. According to the invention, it is possible to provide a surface-modified thermoplastic resin in which sufficient bonding strength is imparted to a thermoplastic resin.

Fig. 1 is a schematic sectional view showing an example of a surface-modified thermoplastic resin.
Fig. 2 is a schematic sectional view showing an example of a thermal transfer surface-modifying sheet.
Fig. 3 is a schematic sectional view showing an aspect in which an easy adherence layer side of the thermal transfer surface-modifying sheet which is a laminate of a release sheet and the easy adherence layer is placed on at least a part of a surface of the thermoplastic resin.
Fig. 4 is a schematic sectional view showing an embodiment of a bonded structure.
Fig. 5 is a schematic sectional view showing an embodiment of a thermoplastic resin with a thermal transfer surface-modifying sheet.
Fig. 6 is a schematic sectional view showing an embodiment of a bonded structure manufactured in examples and comparative examples.

### <<First Method for Manufacturing Surface-Modified Thermoplastic Resin of Invention>>

A first method for manufacturing a surface-modified thermoplastic resin of the invention is a method for manufacturing a surface-modified thermoplastic resin in which an easy adherence layer is laminated on a thermoplastic resin. That is, the first method for manufacturing a surface-modified thermoplastic resin of the invention can also be a method for treating a surface of a thermoplastic resin (surface treatment method of a thermoplastic resin).

In the first method for manufacturing a surface-modified thermoplastic resin of the invention, a surface treatment step, which is performed in the related art, can be preferably removed, while obtaining strong bonding strength. In addition, in one embodiment of the first method for manufacturing a surface-modified thermoplastic resin of the invention, the use of a release agent is not necessary due to surface treatment performed at the same time with a molding process, and thus, a release agent removal step (sand blasting treatment, degreasing treatment or the like) can be removed.

In the first method for manufacturing a surface-modified thermoplastic resin of the invention, in a case where a melting point of the thermoplastic resin is set as T°C, an easy adherence layer is provided on at least a part of a surface of the thermoplastic resin, and heat welding is performed at a temperature equal to or higher than (T - 50)°C. By performing the surface treatment of the thermoplastic resin by such a method, it is possible to impart sufficient bonding strength to the thermoplastic resin and preferably, it can be done with high productivity and low cost.

In the first method for manufacturing a surface-modified thermoplastic resin of the invention, the easy adherence layer is provided on at least a part of the surface of the thermoplastic resin.

An expression "on at least a part of the surface of the thermoplastic resin" means at least a part of all of surfaces provided with the thermoplastic resin. For example, in a case where a shape of the thermoplastic resin is a plate shape, a sheet shape, or a film shape, the above expression means a part of at least one surface thereof or the entire area of at least one surface thereof.

As the thermoplastic resin, any suitable thermoplastic resin can be used, within a range capable of exhibiting the effect of the invention. Examples of such a thermoplastic resin include polypropylene (PP), polyamide (PA), polyphenylene ether (PPE), polyphenylene sulfide (PPS), polyethylene terephthalate (PET), polybutylene terephthalate (PBT), polyacetal (POM), polyether ether ketone (PEEK), and polycarbonate (PC). Among these resins, polyphenylene sulfide (PPS), polyamide (PA), and polypropylene (PP) are used as the thermoplastic resin capable of advantageously exhibiting the effect of the invention.

A fiber reinforced thermoplastic resin (FRTP) can be used as the thermoplastic resin.

Examples of the fiber reinforced thermoplastic resin (FRTP) include a carbon fiber reinforced thermoplastic resin (CFRTP) and a glass fiber reinforced thermoplastic resin (GFRTP).

As the carbon fiber reinforced thermoplastic resin (CFRTP), any suitable carbon fiber reinforced thermoplastic resin (CFRTP) can be used. Examples of the carbon fiber reinforced thermoplastic resin (CFRTP) include a PPS-based carbon fiber reinforced thermoplastic resin, a PA-based carbon fiber reinforced thermoplastic resin, and a PP-based carbon fiber reinforced thermoplastic resin.

As the glass fiber reinforced thermoplastic resin (GFRTP), any suitable glass fiber reinforced thermoplastic resin (CFRTP) can be used. Examples of the glass fiber reinforced thermoplastic resin (GFRTP) include a PPS-based glass fiber reinforced thermoplastic resin, a PA-based glass fiber reinforced thermoplastic resin, and a PP-based glass fiber reinforced thermoplastic resin.

As the shape of the thermoplastic resin, any suitable shape can be used, within a range not negatively affecting the effect of the invention. Examples of such a shape include a plate shape having a flat surface, a plate shape having a curved surface, a sheet shape, and a film shape.

As a thickness of the thermoplastic resin, any suitable thickness can be used according to the purpose, within a range not negatively affecting the effect of the invention. Such a thickness is, for example, 0.001 mm to 10 mm.

In the first method for manufacturing a surface-modified thermoplastic resin of the invention, any suitable method can be used, within a range not negatively affecting the effect of the invention, as the method of providing the easy adherence layer on at least a part of the surface of the thermoplastic resin. Examples of such a method include a method of applying a solution including a material of the easy adherence layer and a solvent onto at least a part of the surface of the thermoplastic resin, a method of performing melt extrusion of the easy adherence layer on at least a part of the surface of the thermoplastic resin, and a method of laminating the easy adherence layer in a sheet state on at least a part of the surface of the thermoplastic resin.

Any suitable method can be used as the method of applying a solution including a material of the easy adherence layer and a solvent, within a range not negatively affecting the effect of the invention. Examples of such a method include dipping of the thermoplastic resin into a solution including a material of the easy adherence layer and a solvent, brush application of a solution including a material of the easy adherence layer and a solvent onto at least a part of the surface of the thermoplastic resin, application of a solution including a material of the easy adherence layer and a solvent onto at least a part of the surface of the thermoplastic resin with various coaters, and spray application of a solution including a material of the easy adherence layer and a solvent onto at least a part of the surface of the thermoplastic resin.

As the solution including a material of the easy adherence layer and a solvent, a solution obtained by dissolving a material of the easy adherence layer in any suitable solvent, within a range not negatively affecting the effect of the invention, is used.

As such a solvent, any suitable solvent can be used, within a range not negatively affecting the effect of the invention. Examples of such a solvent include alcohols such as methanol, ethanol, and isopropyl alcohol; ketones such as methyl ethyl ketone; ester; aliphatic, alicyclic, and aromatic hydrocarbon; halogenated hydrocarbon; amines such as dimethylformamide; sulfoxides such as dimethylsulfoxide; and ethers such as dimethyl ether and tetrahydrofuran. The solvent may be used alone or in combination of two or more kinds thereof.

A concentration of solid contents in the solution including the material of the easy adherence layer and the solvent can be suitably set according to the purpose. From a viewpoint of simplicity of handleability or the like, such a concentration of solid contents is preferably 0.01% by weight to 20% by weight, more preferably 0.05% by weight to 10% by weight, and even more preferably 0.1% by weight to 5% by weight, as a weight ratio.

The solution including the material of the easy adherence layer and the solvent may include any other suitable components, within a range not negatively affecting the effect of the invention.

The easy adherence layer (or the material of the easy adherence layer) includes any suitable constituent component, within a range not negatively affecting the effect of the invention. Such a constituent component preferably includes a polymer component and the polymer component includes a non-polar unit and a polar unit including and a polar group. A content proportion of the polymer component in the easy adherence layer is preferably 50% by weight to 100% by weight, more preferably 70% by weight to 100% by weight, even more preferably 90% by weight to 100% by weight, particularly preferably 92% by weight to 100% by weight, and most preferably 95% by weight to 100% by weight.

As the non-polar unit in the polymer component, any suitable non-polar polymer unit can be used, within a range not negatively affecting the effect of the invention. Examples of such a non-polar unit include a polyethylene unit, a polypropylene unit, and a polystyrene unit. The non-polar unit may be used alone or in combination of two or more kinds thereof.

As the polar unit including and a polar group in the polymer component, any suitable polymer unit including a polar group can be used, within a range not negatively affecting the effect of the invention. Examples of such a polar group include an epoxy group, a carboxyl group, a nitrile group, an amide group, an ester group, a hydroxyl group, an acid anhydride, and a silanol group. Examples of the polar unit including the polar group include a glycidyl methacrylate unit, a vinyl acetate unit, an acrylonitrile unit, an amide unit, a (meth)acrylic ester unit, a hydroxyethyl (meth)acrylate unit, and a maleic anhydride unit. The polar unit may be used alone or in combination of two or more kinds thereof.

The polymer component which can be included in the easy adherence layer (or material of the easy adherence layer) may be at least one kind selected from a methoxymethyl group-containing polymer, a hydroxyl group-containing polymer, a carboxyl group-containing polymer, and an amino group-containing polymer.

Such a polymer component which can be included in the easy adherence layer (or material of the easy adherence layer) is preferably an addition-type curing agent and more preferably an addition-type curing agent which reacts with an epoxy group.

As the methoxymethyl group-containing polymer, any suitable polymer can be used, as long as it is a polymer containing a methoxymethyl group (-CH₂-OCH₃), within a range not negatively affecting the effect of the invention. As such a methoxymethyl group-containing polymer, a methoxymethylated polyamide resin is used, for example.

As the methoxymethyl group-containing polymer, a commercially available product may be used. As the commercially available product, "Fine Resin" (registered trademark) Series (manufactured by Namariichi Co., Ltd.) and the like are used, for example.

The methoxymethyl group-containing polymer may be used alone or in combination of two or more kinds thereof.

From a viewpoint of further exhibiting the effect of the invention, a weight average molecular weight (Mw) of the methoxymethyl group-containing polymer is preferably 1,000 to 1,000,000, more preferably 3,000 to 500,000, even more preferably 5,000 to 100,000, particularly preferably 7,000 to 70,000, and most preferably 10,000 to 50,000. A method for measuring the weight average molecular weight (Mw) will be described later.

As the hydroxyl group-containing polymer, any suitable polymer can be used, as long as it is a polymer containing a hydroxyl group (-OH), within a range not negatively affecting the effect of the invention. As such a hydroxyl group-containing polymer, a hydroxyl group-containing acrylic polymer is used, for example.

As the hydroxyl group-containing polymer, a commercially available product may be used. As the commercially available product, "ARUFON (registered trademark) UH-2000 SERIES" (manufactured by Toagosei Co., Ltd.) and the like are used, for example.

The hydroxyl group-containing polymer may be used alone or in combination of two or more kinds thereof.

From a viewpoint of further exhibiting the effect of the invention, a weight average molecular weight (Mw) of the hydroxyl group-containing polymer is preferably 500 to 1,000,000, more preferably 700 to 500,000, even more preferably 1,000 to 100,000, particularly preferably 1,500 to 70,000, and most preferably 2,000 to 50,000. A method for measuring the weight average molecular weight (Mw) will be described later.

As the carboxyl group-containing polymer, any suitable polymer can be used, as long as it is a polymer containing a carboxyl group (-COOH), within a range not negatively affecting the effect of the invention. As such a carboxyl group-containing polymer, a carboxyl group-containing acrylic polymer is used, for example.

As the carboxyl group-containing polymer, a commercially available product may be used. As the commercially available product, "ARUFON (registered trademark) UC-3000 SERIES" (manufactured by Toagosei Co., Ltd.) and the like are used, for example.

The carboxyl group-containing polymer may be used alone or in combination of two or more kinds thereof.

From a viewpoint of further exhibiting the effect of the invention, a weight average molecular weight (Mw) of the carboxyl group-containing polymer is preferably 500 to 1,000,000, more preferably 700 to 500,000, even more preferably 1,000 to 100,000, particularly preferably 1,500 to 70,000, and most preferably 2,000 to 50,000. As the weight average molecular weight (Mw), a molecular weight in terms of polystyrene in the GPC measurement was used.

As amino group-containing polymer, any suitable polymer can be used, as long as it is a polymer containing an amino group (-NH₂), within a range not negatively affecting the effect of the invention.

As the amino group-containing polymer, a commercially available product may be used.

The amino group-containing polymer may be used alone or in combination of two or more kinds thereof.

The easy adherence layer (or the material of the easy adherence layer) may include at least one kind selected from a tertiary amine-containing compound and a strong acid.

Such a tertiary amine-containing compound and a strong acid which can be included in the easy adherence layer (or the material of the easy adherence layer) is preferably a catalyst-type curing agent and more preferably a curing agent which reacts with an epoxy group.

As the tertiary amine-containing compound, any suitable compound can be used, as long as it is a compound containing tertiary amine, within a range not negatively affecting the effect of the invention. Examples of the tertiary amine-containing compound include an imidazole derivative and polyethyleneimine.

As the tertiary amine-containing compound, a commercially available product may be used. As the commercially available product, "CUREZOL" SERIES (Imidazole type curing agent for epoxy resin, manufactured by Shikoku Chemicals Corporation) and the like are used as the imidazole derivative, and "EPOMIN" (registered trademark) SERIES (manufactured by Nippon Shokubai Co., Ltd.) and the like are used as the polyethyleneimine.

The tertiary amine-containing compound may be used alone or in combination of two or more kinds thereof.

As the strong acid, any suitable strong acid can be used, within a range not negatively affecting the effect of the invention. Examples of such strong acid include trifluoroborane, ionic liquid, and Nafion.

Examples of the ionic liquid include BF₃-C₂H₅NH₂ and HMI-PF₆.

As the strong acid, a commercially available product may be used.

The strong acid may be used alone or in combination of two or more kinds thereof.

In a case where the solution including the material of the easy adherence layer and the solvent is applied onto at least a part of the surface of the thermoplastic resin, at least some of the solvent is removed by drying, after that. In such drying, at least some of the solvent may be removed, and it is preferable that 50% by weight or more of the solvent is removed, it is more preferable that 80% by weight or more of the solvent is removed, it is even more preferable that 90% by weight or more of the solvent is removed, it is particularly preferable that 95% by weight or more of the solvent is removed, and it is most preferable that all of the solvent is removed.

As a method of the drying, any suitable method can be used, as long as it is a method capable of removing the solvent such as oven heating, infrared heating, or high frequency heating, within a range not negatively affecting the effect of the invention. In addition, as a drying temperature, any suitable temperature can be suitably set according to a boiling point of the solvent used.

As the method of performing melt extrusion of the easy adherence layer, any suitable method can be used, within a range not negatively affecting the effect of the invention. As such a method, a method of performing melt extrusion of the material of the easy adherence layer onto at least a part of the surface of the thermoplastic resin with a melt extruder or the like is used, for example.

As the method of laminating the easy adherence layer in a sheet state, any suitable method can be used, within a range not negatively affecting the effect of the invention. As such a method, a method of laminating the easy adherence layer side of the thermal transfer surface-modifying sheet (laminate of the release sheet and the easy adherence layer) described in the section of <Third Surface Treatment Method >, onto at least a part of the surface of the thermoplastic resin is used, for example.

In the first method for manufacturing a surface-modified thermoplastic resin of the invention, in a case where a melting point of the thermoplastic resin is set as T°C, an easy adherence layer is provided on at least a part of a surface of the thermoplastic resin, and heat welding is performed at a temperature equal to or higher than (T - 50)°C. A temperature of the heat welding is preferably (T - 50)°C to (T + 150)°C, more preferably (T - 25)°C to (T +100)°C, even more preferably (T - 10)°C to (T + 75)°C, and particularly preferably (T)°C to (T + 50)°C. By performing the surface treatment of the thermoplastic resin according to such a method in which the temperature of the heat welding is set to be in the range described above, it is possible to allow melt contact and weld mixing of a boundary surface of the easy adherence layer and the thermoplastic resin to impart sufficient bonding strength to the thermoplastic resin, and preferably, it can be done with high productivity and low cost.

As the method of the heat welding, any suitable method can generally be used, within a range capable of exhibiting the effect of the invention. General examples of such a method include oven heating, infrared heating, high frequency heating, and heating press. According to the present invention, heating press is used, from a viewpoint of further exhibiting the effect of the invention.

As the time for the heat welding, any suitable time can be used, within a range capable of exhibiting the effect of the invention. The time is preferably 1 second to 10 minutes, from a viewpoint of further exhibiting the effect of the invention.

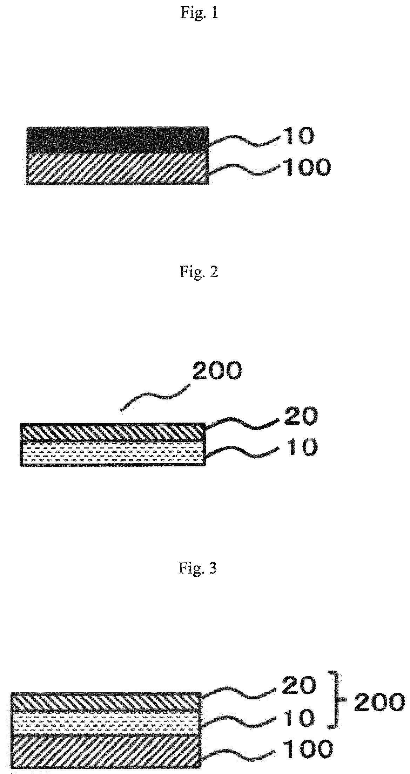

By the first method for manufacturing a surface-modified thermoplastic resin of the invention, an easy adherence layer 10 is provided on a surface of a thermoplastic resin 100 as shown in Fig. 1, and a surface-modified thermoplastic resin (also referred to as a laminate member of the thermoplastic resin and the easy adherence layer) is obtained. In Fig. 1, the easy adherence layer 10 is laminated on the surface of the thermoplastic resin 100, and preferably, a mixed layer (not shown) in which the thermoplastic resin and the easy adherence layer are mixed, is provided between the thermoplastic resin 100 and the easy adherence layer 10. A thickness of this mixed layer is preferably equal to or greater than 1.5 nm and more preferably equal to or greater than 2.0 nm.

As a thickness of the easy adherence layer, any suitable thickness can be used according to the purpose within a range not negatively affecting the effect of the invention. From a viewpoint of further exhibiting the effect of the invention, such a thickness is preferably 0.001 µm to 100 µm, more preferably 0.01 µm to 10 µm, even more preferably 0.05 µm to 5 µm, and particularly preferably 0.1 µm to 3 µm.

### <Second Method for Manufacturing Surface-Modified Thermoplastic Resin » This second method is a method not according to the present invention.

A second method for manufacturing a surface-modified thermoplastic resin is a method for manufacturing a surface-modified thermoplastic resin in which an easy adherence layer is laminated on a thermoplastic resin. That is, the second method for manufacturing a surface-modified thermoplastic resin can also be a method for treating a surface of a thermoplastic resin (surface treatment method of a thermoplastic resin).

In the second method for manufacturing a surface-modified thermoplastic resin, at least a part of the surface of the thermoplastic resin is set in a molten state, and the easy adherence layer is then provided on the surface of the thermoplastic resin in a molten state. By performing the surface treatment of the thermoplastic resin by such a method, it is possible to impart sufficient bonding strength to the thermoplastic resin and preferably, it can be done with high productivity and low cost.

In the second method for manufacturing a surface-modified thermoplastic resin, at least a part of the surface of the thermoplastic resin is set in a molten state.

For the expression "on at least a part of the surface of the thermoplastic resin", the meaning in the description in the section of <First Method for Manufacturing Surface-Modified Thermoplastic Resin of Invention> can be used as it is.

As the thermoplastic resin, the meaning in the description in the section of <First Method for Manufacturing Surface-Modified Thermoplastic Resin of Invention> can be used as it is.

A term "molten state" is a state where at least a part of the surface of the thermoplastic resin is melted, and the molten state is preferably obtained by setting the temperature of the thermoplastic resin as a temperature equal to or higher than the melting point thereof.

In the second method for manufacturing a surface-modified thermoplastic resin, at least a part of the surface of the thermoplastic resin is set to a molten state, and the easy adherence layer is then provided on the surface of the thermoplastic resin in the molten state. By providing the easy adherence layer on the surface of the thermoplastic resin in a molten state, it is possible to allow weld mixing of the easy adherence layer due to heat of the surface of the thermoplastic resin to impart sufficient bonding strength to the thermoplastic resin and preferably, it can be done with high productivity and low cost.

As the easy adherence layer, the meaning in the description in the section of <First Method for Manufacturing Surface-Modified Thermoplastic Resin of Invention> can be used as it is.

In the second method for manufacturing a surface-modified thermoplastic resin, as the method of providing the easy adherence layer on the surface of the thermoplastic resin in a molten state, a method of placing the easy adherence layer side of the thermal transfer surface-modifying sheet which is a laminate of a release sheet and the easy adherence layer, on the surface of the thermoplastic resin in a molten state is used, for example. By such a method, it is possible to impart more sufficient bonding strength to the thermoplastic resin and preferably, it can be done with high productivity and low cost. The thermal transfer surface-modifying sheet which is a laminate of a release sheet and the easy adherence layer and a method of the placing thereof will be described in the section of <Third Method for Manufacturing Surface-Modified Thermoplastic Resin>.

### <Third Method for Manufacturing Surface-Modified Thermoplastic Resin >

This third method is a method not according to the present invention.

A third method for manufacturing a surface-modified thermoplastic resin is a method for manufacturing a surface-modified thermoplastic resin in which an easy adherence layer is laminated on a thermoplastic resin. That is, the third method for manufacturing a surface-modified thermoplastic resin can also be a method for treating a surface of a thermoplastic resin (surface treatment method of a thermoplastic resin).

In the third method for manufacturing a surface-modified thermoplastic resin, the easy adherence layer side of the thermal transfer surface-modifying sheet which is a laminate of a release sheet and the easy adherence layer is placed on at least a part of the surface of the thermoplastic resin and heat welding is performed. By performing the surface treatment of the thermoplastic resin by such a method, it is possible to impart sufficient bonding strength to the thermoplastic resin and preferably, it can be done with high productivity and low cost.

In the third method for manufacturing a surface-modified thermoplastic resin, the easy adherence layer side of the thermal transfer surface-modifying sheet which is a laminate of a release sheet and the easy adherence layer is placed on at least a part of the surface of the thermoplastic resin.

For the expression "on at least a part of the surface of the thermoplastic resin", the meaning in the description in the section of <First Method for Manufacturing Surface-Modified Thermoplastic Resin of Invention> can be used as it is.

As the thermoplastic resin, the meaning in the description in the section of <First Method for Manufacturing Surface-Modified Thermoplastic Resin of Invention> can be used as it is.

As the easy adherence layer, the meaning in the description in the section of <First Method for Manufacturing Surface-Modified Thermoplastic Resin of Invention> can be used as it is.

The thermal transfer surface-modifying sheet which is a laminate of a release sheet and the easy adherence layer is a thermal transfer surface-modifying sheet 200 which is a laminate of a release sheet 20 and the easy adherence layer 10, as shown in Fig. 2.

In the third method for manufacturing a surface-modified thermoplastic resin, an aspect in which the easy adherence layer side of the thermal transfer surface-modifying sheet which is a laminate of a release sheet and the easy adherence layer is placed on at least a part of the surface of the thermoplastic resin, is an aspect in which the thermal transfer surface-modifying sheet 200 is placed on the surface of the thermoplastic resin 100 so that the easy adherence layer 10 side of the thermal transfer surface-modifying sheet 200 becomes a surface side of the thermoplastic resin 100, as shown in Fig. 3.

The thermal transfer surface-modifying sheet can be manufactured by any suitable method, within a range not negatively affecting the effect of the invention. Examples of such a method include a method of dipping a release sheet into a solution including a material of the easy adherence layer and a solvent and performing drying, if necessary, a method of performing brush application of a solution including a material of the easy adherence layer and a solvent onto the surface of the release sheet and performing drying, if necessary, a method of applying a solution including a material of the easy adherence layer and a solvent onto the surface of the release sheet with various coater and performing drying, if necessary, and a method of performing spray application of a solution including a material of the easy adherence layer and a solvent onto the surface of the release sheet and performing drying, if necessary. For the expression "solution including a material of the easy adherence layer and a solvent", the meaning in the description in the section of <First Surface Treatment Method of Invention> can be used as it is.

As the release sheet, any suitable release sheet can be used, within a range not negatively affecting the effect of the invention. Examples of the release sheet include a fluororesin sheet film (manufactured by Nitto Denko Corporation, NITOFLON), a polyester resin sheet, a polymethylpentene resin sheet (manufactured by Mitsui Chemicals Tohcello, Inc., OPULENT (registered trademark)), and a polystyrene resin sheet (manufactured by Kurabo Industries Ltd., OIDYS (registered trademark)). From a viewpoint of further exhibiting the effect of the invention, a thickness of the release sheet is preferably 1 µm to 1,000 µm, more preferably 10 µm to 500 µm, even more preferably 20 µm to 250 µm, and particularly preferably 50 µm to 200 µm.

In the third method for manufacturing a surface-modified thermoplastic resin, any suitable device can be used, in a case of providing the easy adherence layer on at least a part of the surface of the thermoplastic resin, within a range not negatively affecting the effect of the invention. For example, the easy adherence layer is provided on at least a part of the surface of the thermoplastic resin in a molding processing machine (for example, a press machine).

In the third method for manufacturing a surface-modified thermoplastic resin, the easy adherence layer side of the thermal transfer surface-modifying sheet is placed on at least a part of the surface of the thermoplastic resin and the heat welding is performed. The heat welding may be performed at the same time with the placing of the thermal transfer surface-modifying sheet or may be performed after placing the thermal transfer surface-modifying sheet.

A typical aspect of the heat welding in the third method for manufacturing a surface-modified thermoplastic resin is an aspect in which the easy adherence layer side of the thermal transfer surface-modifying sheet is placed on at least a part of the surface of the thermoplastic resin and a molding process accompanied with heating (for example, heating press) is performed, in a molding processing machine (for example, a press machine). According to such an aspect, it is possible to perform the molding process of the thermoplastic resin at the same time with the surface treatment of the thermoplastic resin, and thus, high productivity and low cost can be provided.

In the third method for manufacturing a surface-modified thermoplastic resin, in the heat welding, in a case where a melting point of the thermoplastic resin is set as T°C, the heat welding is performed preferably at a temperature equal to or higher than (T - 50)°C. A temperature of the heat welding is more preferably (T - 50)°C to (T + 150)°C, even more preferably (T - 25)°C to (T +100)°C, particularly preferably (T - 10)°C to (T + 75)°C, and most preferably (T)°C to (T + 50)°C. By setting the temperature of the heat welding in the range described above, it is possible to allow melt contact and weld mixing of a boundary surface of the easy adherence layer of the thermal transfer surface-modifying sheet and the thermoplastic resin to impart more sufficient bonding strength to the thermoplastic resin, and preferably, it can be done with high productivity and low cost.

As the method of the heat welding, any suitable method can be used, within a range capable of exhibiting the effect of the invention. Examples of such a method include oven heating, infrared heating, high frequency heating, and heating press, and heating press is preferable, from a viewpoint of further exhibiting the effect of the invention.

As the time for the heat welding, any suitable time can be used, within a range capable of exhibiting the effect of the invention. The time is preferably 1 second to 10 minutes, from a viewpoint of further exhibiting the effect of the invention.

The easy adherence layer side of the thermal transfer surface-modifying sheet which is a laminate of the release sheet and the easy adherence layer is placed on at least a part of a surface of the thermoplastic resin, the heat welding is performed, and then, preferably, the release sheet is removed. By removing the release sheet as described above, the easy adherence layer is transferred to the surface of the thermoplastic resin, and a surface-modified thermoplastic resin (also referred to as a laminate member of the thermoplastic resin and the easy adherence layer) is obtained. In addition, as described above, preferably, a mixed layer in which the thermoplastic resin and the easy adherence layer are mixed, is provided between the thermoplastic resin and the easy adherence layer. A thickness of this mixed layer is preferably equal to or greater than 1.5 nm and more preferably equal to or greater than 2.0 nm.

### <<Method for Bonding Thermoplastic Resin>> This method is a method not according to the present invention.

In a method for bonding the thermoplastic resin, an adhesive layer is provided on a surface-treated surface of the thermoplastic resin subjected to the surface treatment obtained by the surface treatment method of the invention and is bonded to an adherend. In the method for bonding the thermoplastic resin, the thermoplastic resin is subjected to the surface treatment by the surface treatment method of the invention, and accordingly, the thermoplastic resin is compatible with the adhesive layer well and can be bonded to various adherends well.

As the adhesive layer, any suitable adhesive layer can be used, within a range not negatively affecting the effect of the invention. From a viewpoint of further exhibiting the effect of the invention, the adhesive layer preferably contains a component having a functional group which reacts with a polar group. In a case of using such an adhesive layer, the effect of the invention can be further exhibited.

As the functional group reacting with a polar group, any suitable functional group can be used, within a range not negatively affecting the effect of the invention. Examples of the functional group include an epoxy group, a carboxyl group, an acid anhydride group, an amino group, a hydroxyl group, a silanol group, and an isocyanate group. Among these functional groups, an epoxy group is preferable, from a viewpoint of further exhibiting the effect of the invention.

From a viewpoint of further exhibiting the effect of the invention, a thickness of the adhesive layer is preferably 1 µm to 5,000 µm, more preferably 10 µm to 2,000 µm, even more preferably 50 µm to 1,000 µm, and particularly preferably 100 µm to 500 µm.

### «Surface-Modified Thermoplastic Resin» This resin is not a resin according to the present invention.

A surface-modified thermoplastic resin described herein is a surface-modified thermoplastic resin in which an easy adherence layer is laminated on a thermoplastic resin, and includes a mixed layer in which the thermoplastic resin and the easy adherence layer are mixed, between the thermoplastic resin and the easy adherence layer. A thickness of the mixed layer is equal to or greater than 1.5 nm.

As the thermoplastic resin, the meaning in the description in the section of <First Method for Manufacturing Surface-Modified Thermoplastic Resin of Invention> can be used as it is.

As the easy adherence layer, the meaning in the description in the section of <First Method for Manufacturing Surface-Modified Thermoplastic Resin of Invention> can be used as it is.

The mixed layer is a layer in which the thermoplastic resin and the easy adherence layer are mixed, and a representative thereof is a layer of a weld and mixed portion obtained by providing the easy adherence layer on at least a part of the surface of the thermoplastic resin and performing heat welding, thereby allowing melt contact and weld mixing of a boundary surface of the easy adherence layer and the thermoplastic resin.

The thickness of the mixed layer can be suitably determined according to conditions of the heat welding, or kinds of the thermoplastic resin or the easy adherence layer. The thickness of the mixed layer is preferably equal to or greater than 1.5 nm and more preferably equal to or greater than 2.0 nm.

In the surface-modified thermoplastic resin, as the thickness of the thermoplastic resin, any suitable thickness can be used according to the purpose within a range not negatively affecting the effect of the invention. The thickness thereof is, for example, 0.001 mm to 10 mm.

In the surface-modified thermoplastic resin, as the thickness of the easy adherence layer, any suitable thickness can be used according to the purpose within a range not negatively affecting the effect of the invention. From a viewpoint of further exhibiting the effect of the invention, such a thickness is preferably 0.001 µm to 100 µm, more preferably 0.01 µm to 10 µm, even more preferably 0.05 µm to 5 µm, and particularly preferably 0.1 µm to 3 µm.

The surface-modified thermoplastic resin is preferably obtained by the method for manufacturing a surface-modified thermoplastic resin of the invention.

### <<Method for Manufacturing Bonded Structure>> This method is a method not according to the present invention.

The method for manufacturing a bonded structure described herein is a method for manufacturing a bonded structure in which a surface-modified thermoplastic resin (A) obtained by the manufacturing method of the invention is laminated on an adherend via an adhesive layer, and the adhesive layer is provided on the surface of the easy adherence layer side of the surface-modified thermoplastic resin (A) and the surface-modified thermoplastic resin (A) is bonded to an adherend.

The adhesive layer preferably contains a component having a functional group which reacts with a polar group. In a case of using such an adhesive layer, the effect of the invention can be further exhibited.

As the functional group which reacts with a polar group, any suitable functional group can be used, within a range not negatively affecting the effect of the invention. Examples of such a functional group include an epoxy group, a carboxyl group, an acid anhydride group, an amino group, a hydroxyl group, a silanol group, and an isocyanate group. Among such functional groups, an epoxy group is preferable, from a viewpoint of further exhibiting the effect of the invention.

From a viewpoint of further exhibiting the effect of the invention, the thickness of the adhesive layer is preferably 1 µm to 5,000 µm, more preferably 10 µm to 2,000 µm, even more preferably 50 µm to 1,000 µm, and particularly preferably 100 µm to 500 µm.

In the method for manufacturing a bonded structure, the adherend is preferably a surface-modified thermoplastic resin (B) obtained by the manufacturing method described herein, and the adhesive layer is laminated on the surface of the easy adherence layer side of the surface-modified thermoplastic resin (B) which is the adherend. Here, the surface-modified thermoplastic resin (B) means a surface-modified thermoplastic resin other than the surface-modified thermoplastic resin (A) described above. In this case, the thermoplastic resin constituting the surface-modified thermoplastic resin (A) is preferably different from the thermoplastic resin constituting the surface-modified thermoplastic resin (B). In a case of using such an aspect, the effect of the invention can be further exhibited.

### <<Bonded Structure>> This bonded structure is a structure not according to the present invention.

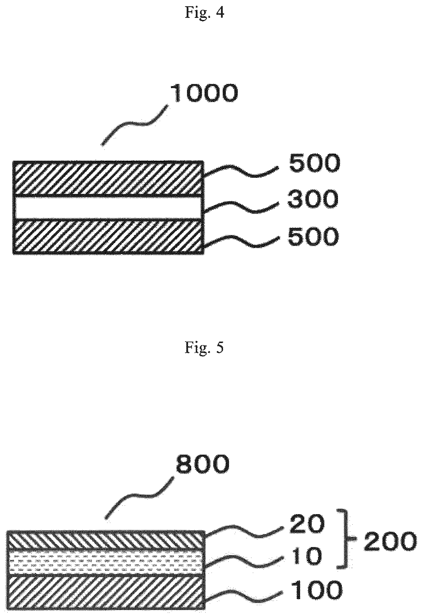

A bonded structure described herein is a bonded structure including a surface-modified thermoplastic resin in which an easy adherence layer is laminated on a thermoplastic resin, an adhesive layer, and another surface-modified thermoplastic resin in which an easy adherence layer is laminated on a thermoplastic resin, in this order. The easy adherence layer sides of the two surface-modified thermoplastic resins are respectively bonded to the adhesive layer. That is, in one embodiment, as shown in Fig. 4, a bonded structure 1000 of the invention is a laminate of a surface-modified thermoplastic resin 500, an adhesive layer 300, and a surface-modified thermoplastic resin 500.

As the adhesive layer included in the bonded structure, any suitable adhesive layer can be used, within a range not negatively affecting the effect of the invention. From a viewpoint of further exhibiting the effect of the invention, the adhesive layer preferably includes a functional group which reacts with a polar group included in the easy adherence layer.

As the functional group reacting with a polar group, any suitable functional group can be used, within a range not negatively affecting the effect of the invention. Examples of the functional group include an epoxy group, a carboxyl group, an acid anhydride group, an amino group, a hydroxyl group, a silanol group, and an isocyanate group. Among these functional groups, an epoxy group is preferable, from a viewpoint of further exhibiting the effect of the invention.

From a viewpoint of further exhibiting the effect of the invention, a thickness of the adhesive layer is preferably 1 µm to 5,000 µm, more preferably 10 µm to 2,000 µm, even more preferably 50 µm to 1,000 µm, and particularly preferably 100 µm to 500 µm.

In a case where tensile shear adhesiveness between both the surface-modified thermoplastic resins at a tension rate of 5 mm/min at 25°C is set as P (Pa), and tensile shear adhesiveness between both the thermoplastic resins in the bonded structure including the thermoplastic resin constituting the surface-modified thermoplastic resin, the adhesive layer, and the thermoplastic resin constituting the surface-modified thermoplastic resin, in this order, at a tension rate of 5 mm/min at 25°C is set as P0 (Pa), the bonded structure of the invention preferably satisfies P/PO > 2, more preferably satisfies P/PO > 2.5, even more preferably satisfies P/PO > 3.0, particularly preferably satisfies P/PO > 3.5, and most preferably satisfies P/PO > 4.0. By setting the P/PO to be in the range described above, the bonded structure of the invention can exhibit more sufficient bonding strength.

Preferably, in a case where the bonded structure is broken by pulling the two surface-modified thermoplastic resins at a tension rate of 5 mm/min at 25°C, a fracture occurs in at least one of the adhesive layer and the two surface-modified thermoplastic resins. By providing such properties, the bonded structure can exhibit more sufficient bonding strength.

### «Thermal Transfer Surface-Modifying Sheet» This sheet is a sheet not according to the present invention.

A thermal transfer surface-modifying sheet described herein is a laminate of a release sheet and an easy adherence layer. Specifically, the thermal transfer surface-modifying sheet is the thermal transfer surface-modifying sheet 200 which is a laminate of the release sheet 20 and the easy adherence layer 10, as shown in Fig. 2.

Preferably, after the easy adherence layer side of the thermal transfer surface-modifying sheet described herein is placed on at least a part of the surface of the thermoplastic resin and subjected to the heat welding, the release sheet is removed to transfer the easy adherence layer to the surface of the thermoplastic resin, whereby a surface-modified thermoplastic resin is obtained. As described above, in a case of using the thermal transfer surface-modifying sheet described herein, it is possible to easily manufacture the surface-modified thermoplastic resin and it is possible to impart sufficient bonding strength to the thermoplastic resin with high productivity and low cost.

As the easy adherence layer, the meaning in the description in the section of <First Method for Manufacturing Surface-Modified Thermoplastic Resin of Invention> can be used as it is.

### <<Thermoplastic Resin with Thermal Transfer Surface-Modifying Sheet>> This embodiment is not according to the present invention.

In a thermoplastic resin with a thermal transfer surface-modifying sheet, the thermal transfer surface-modifying sheet described herein is laminated on the surface of the thermoplastic resin so that an easy adherence layer side of the thermal transfer surface-modifying sheet becomes the surface side of the thermoplastic resin. That is, as shown in Fig. 5, in a thermoplastic resin with a thermal transfer surface-modifying sheet 800 of the invention, the easy adherence layer 10 side of the thermal transfer surface-modifying sheet 200 which is a laminate of the release sheet 20 and the easy adherence layer 10 is laminated on the surface of the thermoplastic resin 100.

The thermoplastic resin with a thermal transfer surface-modifying sheet can be used in the method for manufacturing a surface-modified thermoplastic resin of the invention as it is. That is, for example, in a case where a melting point of the thermoplastic resin in the thermoplastic resin with a thermal transfer surface-modifying sheet of the invention is set as T°C, the heating is performed at a temperature equal to or higher than (T - 50)°C and then the release sheet is preferably removed. By removing the release sheet as described above, the easy adherence layer is provided on the surface of the thermoplastic resin and the surface-modified thermoplastic resin is provided. By performing the surface treatment of the thermoplastic resin by such a method, it is possible to apply sufficient bonding strength to the thermoplastic resin with high productivity and low cost, preferably.

### <<Others>>

As other preferable embodiments, the followings are used.

In one embodiment, a first surface treatment method is a method for treating a surface of a thermoplastic resin, and in a case where a melting point of the thermoplastic resin is set as T°C, an easy adherence layer is provided on at least a part of a surface of the thermoplastic resin, and heat welding is performed at a temperature equal to or higher than (T - 50)°C.

In one embodiment, a second surface treatment method is a method for treating a surface of a thermoplastic resin, and after at least a part of the surface of the thermoplastic resin is set to a molten state, an easy adherence layer is then provided on the surface of the thermoplastic resin in the molten state.

In one embodiment, a method for providing the easy adherence layer on the surface of the thermoplastic resin in a molten state is a method for placing the easy adherence layer side of the thermal transfer surface-modifying sheet which is a laminate of the release sheet and the easy adherence layer, on the surface of the thermoplastic resin in the molten state.

In one embodiment, the release sheet is removed after the placing.

In one embodiment, the easy adherence layer includes a polymer component, and the polymer component includes a non-polar unit and a polar unit including and a polar group.

In one embodiment, in the method for bonding the thermoplastic resin, an adhesive layer is provided on a surface-treated surface of the thermoplastic resin subjected to the surface treatment obtained by the surface treatment method of the invention and is bonded to an adherend.

In one embodiment, the adhesive layer contains a component having a functional group which reacts with a polar group.

In one embodiment, a laminate member is a laminate member of the thermoplastic resin and the easy adherence layer, which is obtained by the surface treatment method of the invention.

In one embodiment, the bonded structure is a bonded structure including the laminate member of the invention, the adhesive layer, and the laminate member of the invention, in this order, and the easy adherence layer sides of the two laminate members are respectively bonded to the adhesive layer.

In one embodiment, the adhesive layer contains a component having a functional group which reacts with a polar group.

In one embodiment, in a case where tensile shear adhesiveness between both the laminate members at a tension rate of 5 mm/min at 25°C is set as P (Pa), and tensile shear adhesiveness between both the thermoplastic resins in the bonded structure including the thermoplastic resin constituting the laminate member, the adhesive layer, and the thermoplastic resin constituting the laminate member, in this order, at a tension rate of 5 mm/min at 25°C is set as P0 (Pa), a relationship of P/PO > 2 is satisfied.

In one embodiment, the thermal transfer surface-modifying sheet is a laminate of the release sheet and the easy adherence layer.

In one embodiment, the easy adherence layer side is placed on the surface of the thermoplastic resin in a molten state, at least a part of the surface of which is in a molten state, the release sheet is removed, and accordingly, the easy adherence layer is transferred to the surface of the thermoplastic resin.

In one embodiment, the easy adherence layer includes a polymer component, and the polymer component includes a non-polar unit and a polar unit including a polar group.

In one embodiment, in the thermoplastic resin with a thermal transfer surface-modifying sheet, the thermal transfer surface-modifying sheet is laminated on the surface of the thermoplastic resin so that an easy adherence layer side of the thermal transfer surface-modifying sheet becomes the surface side of the thermoplastic resin.

### Examples

### <<Measurement of Melting Point T (°C) of Thermoplastic Resin>>

Melting points T (°C) of the thermoplastic resins used in examples and comparative examples were measured with a differential scanning calorimetry (DSC), while increasing a temperature from -90°C to 350°C at a rate of 2 °C/min.

A melting point of polyphenylene sulfide (PPS) was 284°C.

A melting point of polypropylene (PP) was 167°C.

A melting point of 6-nylon (PA 6) was 221°C.

A melting point of 6,6-nylon (PA 66) was 260°C.

### «Measurement of Weight Average Molecular Weight (Mw)»

In a case where it is necessary to measure the weight average molecular weight (Mw) of the polymer component which can be included in the easy adherence layer, the measurement was performed by GPC and a molecular weight in terms of polystyrene was obtained.

### <<Method for Bonding Laminate Member>>

### (Bonding Method 1)

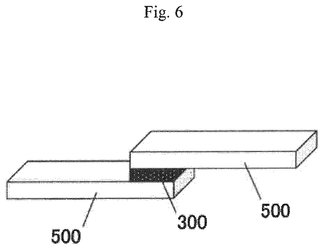

The two laminate members obtained in the examples and comparative examples were bonded to each other in the aspect of Fig. 6 by using an adhesive so that the easy adherence layer sides thereof were bonded to each other, and a bonded structure was obtained. As the adhesive, an epoxy-based adhesive (manufactured by 3M, SW2214) was used, and a pressure sensitive adhesive tape (manufactured by Nitto Denko Corporation, NITOFLON, No. 973UL) was used as a spacer, for adjusting the thickness of the adhesive layer as 0.2 mm. A bonded area was set as 25 mm × 10 mm. Curing conditions of the adhesive were set as 140°C × 20 min.

### (Bonding Method 2)

The two laminate members obtained in the examples and comparative examples were bonded to each other in the aspect of Fig. 6 by using an adhesive so that the easy adherence layer sides thereof were bonded to each other, and a bonded structure was obtained. The bonding was performed by using a rubber-modified epoxy adhesive sheet disclosed in JP-A-2012-197427 as the adhesive sheet. A bonded area was set as 25 mm × 10 mm. Curing conditions of the adhesive were set as 150°C × 20 min.

### (Bonding Method 3)

The two laminate members obtained in the examples and comparative examples were bonded to each other in the aspect of Fig. 6 by using an adhesive so that the easy adherence layer sides thereof were bonded to each other, and a bonded structure was obtained. As the adhesive, an epoxy-based adhesive (manufactured by Nagase ChemteX Corporation, DENATITE XNR3503) was used, and a pressure sensitive adhesive tape (manufactured by Nitto Denko Corporation, NITOFLON, No. 973UL) was used as a spacer, for adjusting the thickness of the adhesive layer as 0.2 mm. A bonded area was set as 25 mm × 10 mm. Curing conditions of the adhesive were set as 100°C × 30 min.

### (Bonding Method 4)

The two laminate members obtained in the examples and comparative examples were bonded to each other in the aspect of Fig. 6 by using an adhesive so that the easy adherence layer sides thereof were bonded to each other, and a bonded structure was obtained. As the adhesive, an acrylic adhesive (manufactured by Cemedine Co., Ltd., Y611black) was used, and a bonded area was set as 25 mm × 10 mm. Curing conditions of the adhesive were set as room temperature × a day or longer.

### (Bonding Method 5)

The two laminate members obtained in the examples and comparative examples were bonded to each other in the aspect of Fig. 6 by using an adhesive so that the easy adherence layer sides thereof were bonded to each other, and a bonded structure was obtained. As the adhesive, an acrylic adhesive (manufactured by Denka Company Limited, C320K) was used and a bonded area was set as 25 mm × 10 mm. Curing conditions of the adhesive were set as room temperature × a day or longer.

### (Bonding Method 6)

The two laminate members obtained in the examples and comparative examples were bonded to each other in the aspect of Fig. 6 by using an adhesive so that the easy adherence layer sides thereof were bonded to each other, and a bonded structure was obtained. As the adhesive, a urethane-based adhesive (manufactured by Henkel Corporation, U-10FL) was used and bonded area was set as 25 mm × 10 mm. Curing conditions of the adhesive were set as room temperature × a day or longer.

### (Bonding Method 7)

The two laminate members obtained in the examples and comparative examples were bonded to each other in the aspect of Fig. 6 by using an adhesive so that the easy adherence layer sides thereof were bonded to each other, and a bonded structure was obtained. As the adhesive, an epoxy-based adhesive (manufactured by 3M, SW2214) was used and a bonded area was set as 25 mm × 10 mm. Curing conditions of the adhesive were set as 120°C × 40 min or longer.

### <<Shear Adhesiveness>>

The tensile and shear adhesiveness between both the laminate members in the bonded structure was measured with a tension tester (manufactured by Minebea Co., Ltd., Model number: TG-100kN). The measurement was performed at 25°C and a tension rate of 5 mm/min. The obtained measurement value was converted per unit area and shear adhesiveness was obtained. A case where the fracture of adherend occurs due to the measurement, means that the shear adhesiveness is great so as to exceed a limit obtained as the measurement value.

### [Example A-1]: Thermal Transfer Surface-Modifying Sheet (1)

A resin (1) (BONDFAST 7B (ethylene-glycidyl methacrylate-vinyl acetate copolymer) manufactured by Sumitomo Chemical Co., Ltd.) was dissolved in hot toluene (60°C) and cooled to room temperature, and a solution having a concentration of 5% by weight was prepared.

A release sheet (NITOFLON No. 900UL (thickness of 0.18 mm) manufactured by Nitto Denko Corporation) was dipped in this solution having a concentration of 5% by weight and air-dried, drying was further performed with a constant temperature dryer at 100°C for 1 minute, and a thermal transfer surface-modifying sheet (1) which is a release sheet including an easy adherence layer was manufactured.

### [Example A-2]: Thermal Transfer Surface-Modifying Sheet (2)

A thermal transfer surface-modifying sheet (2) which is a release sheet including an easy adherence layer was manufactured in the same manner as in Example A-1, except that the resin (1) was changed to a resin (2) (BONDFAST CG5001 (ethylene-glycidyl methacrylate copolymer) manufactured by Sumitomo Chemical Co., Ltd.).

### [Example A-3]: Thermal Transfer Surface-Modifying Sheet (3)

A thermal transfer surface-modifying sheet (3) which is a release sheet including an easy adherence layer was manufactured in the same manner as in Example A-1, except that the resin (1) was changed to a resin (3) (Fine-Blend SAG-005 (styrene-acrylonitrile-glycidyl methacrylate copolymer) manufactured by Nantong Sunny Polymer New Material Technology Co., Ltd.).

### [Example A-4]: Thermal Transfer Surface-Modifying Sheet (4)

A thermal transfer surface-modifying sheet (4) which is a release sheet including an easy adherence layer was manufactured in the same manner as in Example A-1, except that the resin (1) was changed to a resin (4) (Fine Resin FR-101 (methoxymethylated polyamide resin) manufactured by Namariichi Co., Ltd. / p-toluenesulfonic acid (PTS) (mixture having a weight ratio of 99/1)), and hot toluene (60°C) was changed to methanol (room temperature).

### [Example A-5]: Thermal Transfer Surface-Modifying Sheet (5)

A thermal transfer surface-modifying sheet (5) which is a release sheet including an easy adherence layer was manufactured in the same manner as in Example A-1, except that the resin (1) was changed to a resin (5) (Fine Resin FR-101 (methoxymethylated polyamide resin) manufactured by Namariichi Co., Ltd.), and hot toluene (60°C) was changed to methanol (room temperature).

### [Example A-6]: Thermal Transfer Surface-Modifying Sheet (6)

A thermal transfer surface-modifying sheet (6) which is a release sheet including an easy adherence layer was manufactured in the same manner as in Example A-1, except that the resin (1) was changed to a resin (6) (Fine Resin FR-105 (methoxymethylated polyamide resin) manufactured by Namariichi Co., Ltd.), and hot toluene (60°C) was changed to methanol (room temperature).

### [Example A-7]: Thermal Transfer Surface-Modifying Sheet (7)

A thermal transfer surface-modifying sheet (7) which is a release sheet including an easy adherence layer was manufactured in the same manner as in Example A-1, except that the resin (1) was changed to a resin (7) (Fine Resin FR-105 (methoxymethylated polyamide resin) manufactured by Namariichi Co., Ltd. / ARUFON (registered trademark) UH-2041 (hydroxyl group-containing acrylic polymer) manufactured by Toagosei Co., Ltd. (mixture having a weight ratio of 50/50)), and hot toluene (60°C) was changed to methanol (room temperature).

### [Example A-8]: Thermal Transfer Surface-Modifying Sheet (8)

A thermal transfer surface-modifying sheet (8) which is a release sheet including an easy adherence layer was manufactured in the same manner as in Example A-1, except that the resin (1) was changed to a resin (8) (Fine Resin FR-105 (methoxymethylated polyamide resin) manufactured by Namariichi Co., Ltd. / ARUFON (registered trademark) UH-2170 (hydroxyl group-containing acrylic polymer) manufactured by Toagosei Co., Ltd. (mixture having a weight ratio of 50/50)), and hot toluene (60°C) was changed to methanol (room temperature).

### [Example A-9]: Thermal Transfer Surface-Modifying Sheet (9)

A thermal transfer surface-modifying sheet (9) which is a release sheet including an easy adherence layer was manufactured in the same manner as in Example A-1, except that the resin (1) was changed to a resin (9) (Fine Resin FR-105 (methoxymethylated polyamide resin) manufactured by Namariichi Co., Ltd. / ARUFON (registered trademark) UC-3000 (carboxyl group-containing acrylic polymer) manufactured by Toagosei Co., Ltd. (mixture having a weight ratio of 50/50)), and hot toluene (60°C) was changed to methanol (room temperature).

### [Example A-10]: Thermal Transfer Surface-Modifying Sheet (10)

A thermal transfer surface-modifying sheet (10) which is a release sheet including an easy adherence layer was manufactured in the same manner as in Example A-1, except that the resin (1) was changed to a resin (10) (Fine Resin FR-105 (methoxymethylated polyamide resin) manufactured by Namariichi Co., Ltd. / ARUFON (registered trademark) UC-3150 (carboxyl group-containing acrylic polymer) manufactured by Toagosei Co., Ltd. (mixture having a weight ratio of 50/50)), and hot toluene (60°C) was changed to methanol (room temperature).

### [Example A-11]: Thermal Transfer Surface-Modifying Sheet (11)

A thermal transfer surface-modifying sheet (11) which is a release sheet including an easy adherence layer was manufactured in the same manner as in Example A-1, except that the resin (1) was changed to a resin (11) (ARUFON (registered trademark) UH-2041 (hydroxyl group-containing acrylic polymer) manufactured by Toagosei Co., Ltd. / ARUFON (registered trademark) UH-2170 (hydroxyl group-containing acrylic polymer) manufactured by Toagosei Co., Ltd. (mixture having a weight ratio of 50/50)), and hot toluene (60°C) was changed to methanol (room temperature).

### [Example A-12]: Thermal Transfer Surface-Modifying Sheet (12)

A thermal transfer surface-modifying sheet (12) which is a release sheet including an easy adherence layer was manufactured in the same manner as in Example A-1, except that the resin (1) was changed to a resin (12) (ARUFON (registered trademark) UC-3000 (carboxyl group-containing acrylic polymer) manufactured by Toagosei Co., Ltd. / ARUFON (registered trademark) UC-3150 (carboxyl group-containing acrylic polymer) manufactured by Toagosei Co., Ltd. (mixture having a weight ratio of 50/50)), and hot toluene (60°C) was changed to methanol (room temperature).

### [Example A-13]: Thermal Transfer Surface-Modifying Sheet (13)

A thermal transfer surface-modifying sheet (13) which is a release sheet including an easy adherence layer was manufactured in the same manner as in Example A-1, except that the resin (1) was changed to a resin (13) (Fine Resin FR-105 (methoxymethylated polyamide resin) manufactured by Namariichi Co., Ltd. / EPOMIN (registered trademark) SP-200 (polyethyleneimine) manufactured by Nippon Shokubai Co., Ltd. (mixture having a weight ratio of 50/50)), and hot toluene (60°C) was changed to methanol (room temperature).

### [Example A-14]: Thermal Transfer Surface-Modifying Sheet (14)

A thermal transfer surface-modifying sheet (14) which is a release sheet including an easy adherence layer was manufactured in the same manner as in Example A-1, except that the resin (1) was changed to a resin (14) (Fine Resin FR-105 (methoxymethylated polyamide resin) manufactured by Namariichi Co., Ltd. / CUREZOL 2P4MHZ-PW (imidazole-based epoxy resin curing agent) manufactured by Shikoku Chemicals Corporation (mixture having a weight ratio of 50/50)), and hot toluene (60°C) was changed to methanol (room temperature).

### [Example A-15]: Thermal Transfer Surface-Modifying Sheet (15)

A thermal transfer surface-modifying sheet (15) which is a release sheet including an easy adherence layer was manufactured in the same manner as in Example A-1, except that the resin (1) was changed to a resin (15) (Fine Resin FR-105 (methoxymethylated polyamide resin) manufactured by Namariichi Co., Ltd. / trifluoroborane (BF₃) manufactured by Tokyo Chemical Industry Co., Ltd. (mixture having a weight ratio of 50/50)), and hot toluene (60°C) was changed to methanol (room temperature).

### [Example A-16]: Thermal Transfer Surface-Modifying Sheet (16)

A thermal transfer surface-modifying sheet (16) which is a release sheet including an easy adherence layer was manufactured in the same manner as in Example A-1, except that the resin (1) was changed to a resin (16) (Fine Resin FR-105 (methoxymethylated polyamide resin) manufactured by Namariichi Co., Ltd. / HMI-PF₆ (ionic liquid) manufactured by Toyo Gosei Co., Ltd. (mixture having a weight ratio of 50/50)), and hot toluene (60°C) was changed to methanol (room temperature).

### [Example A-17]: Thermal Transfer Surface-Modifying Sheet (17)

A thermal transfer surface-modifying sheet (17) which is a release sheet including an easy adherence layer was manufactured in the same manner as in Example A-1, except that the resin (1) was changed to a resin (17) (Fine Resin FR-105 (methoxymethylated polyamide resin) manufactured by Namariichi Co., Ltd. / NAFION manufactured by Wako Pure Chemical Industries, Ltd. (mixture having a weight ratio of 50/50)), and hot toluene (60°C) was changed to methanol (room temperature).

### [ExampleA-18]: Thermal Transfer Surface-Modifying Sheet (18)

A thermal transfer surface-modifying sheet (18) which is a release sheet including an easy adherence layer was manufactured in the same manner as in Example A-1, except that the resin (1) was changed to a resin (18) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 40/60)), and hot toluene (60°C) was changed to methanol (room temperature).

### [Example A-19]: Thermal Transfer Surface-Modifying Sheet (19)

A thermal transfer surface-modifying sheet (19) which is a release sheet including an easy adherence layer was manufactured in the same manner as in Example A-1, except that the resin (1) was changed to a resin (19) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 50/50)), and hot toluene (60°C) was changed to methanol (room temperature).

### [Example A-20]: Thermal Transfer Surface-Modifying Sheet (20)

A thermal transfer surface-modifying sheet (20) which is a release sheet including an easy adherence layer was manufactured in the same manner as in Example A-1, except that the resin (1) was changed to a resin (20) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 60/40)), and hot toluene (60°C) was changed to methanol (room temperature).

### [Example A-21]: Thermal Transfer Surface-Modifying Sheet (21)

A thermal transfer surface-modifying sheet (21) which is a release sheet including an easy adherence layer was manufactured in the same manner as in Example A-1, except that the resin (1) was changed to a resin (21) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 70/30)), and hot toluene (60°C) was changed to methanol (room temperature).

### [Example A-22]: Thermal Transfer Surface-Modifying Sheet (22)

A thermal transfer surface-modifying sheet (22) which is a release sheet including an easy adherence layer was manufactured in the same manner as in Example A-1, except that the resin (1) was changed to a resin (22) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 80/20)), and hot toluene (60°C) was changed to methanol (room temperature).

### [Example A-23]: Thermal Transfer Surface-Modifying Sheet (23)

A thermal transfer surface-modifying sheet (23) which is a release sheet including an easy adherence layer was manufactured in the same manner as in Example A-1, except that the resin (1) was changed to a resin (23) (Fine Resin FR-105 (methoxymethylated polyamide resin) manufactured by Namariichi Co., Ltd. / CUREZOL C11Z-CN (imidazole-type epoxy resin curing agent) manufactured by Shikoku Chemicals Corporation (mixture having a weight ratio of 90/10)), and hot toluene (60°C) was changed to methanol (room temperature).

**Table 1**

| Thermal transfer surface-modifyin g sheet | Resin No. | Resin as material of easy adherence layer |
|---|---|---|
| (1) | (1) | BONDFAST 7B |
| (2) | (2) | BONDFAST CG5001 |
| (3) | (3) | Fine-Blend SAG-005 |
| (4) | (4) | Fine Resin FR-101/PTS = 99/1 (weight ratio) |
| (5) | (5) | Fine Resin FR-101 |
| (6) | (6) | Fine Resin FR-105 |
| (7) | (7) | Fine Resin FR-105/ARUFON UH-2041 = 50/50 (weight ratio) |
| (8) | (8) | Fine Resin FR-105/ARUFON UH-2170 = 50/50 (weight ratio) |
| (9) | (9) | Fine Resin FR-105/ARUFON UC-3000 = 50/50 (weight ratio) |
| (10) | (10) | Fine Resin FR-105/ARUFON UC-3150 = 50/50 (weight ratio) |
| (11) | (11) | ARUFON UH-2041/ARUFON UH-2170 = 50/50 (weight ratio) |
| (12) | (12) | ARUFON UC-3000/ARUFON UC-3150 = 50/50 (weight ratio) |
| (13) | (13) | Fine Resin FR-105/EPOMIN SP 200 = 50/50 (weight ratio) |
| (14) | (14) | Fine Resin FR-105/CUREZOL 2P4MHZ-PW = 50/50 (weight ratio) |
| (15) | (15) | Fine Resin FR-105/BF₃ = 50/50 (weight ratio) |
| (16) | (16) | Fine Resin FR-105/HMI-PF₆ =50/50 (weight ratio) |
| (17) | (17) | Fine Resin FR-105/NAFION = 50/50 (weight ratio) |
| (18) | (18) | Fine Resin FR-105/CUREZOL C11Z-CN = 40/60 (weight ratio) |
| (19) | (19) | Fine Resin FR-105/CUREZOL C11Z-CN = 50/50 (weight ratio) |
| (20) | (20) | Fine Resin FR-105/CUREZOL C11Z-CN = 60/40 (weight ratio) |
| (21) | (21) | Fine Resin FR-105/CUREZOL C11Z-CN = 70/30 (weight ratio) |
| (22) | (22) | Fine Resin FR-105/CUREZOL C11Z-CN = 80/20 (weight ratio) |
| (23) | (23) | Fine Resin FR-105/CUREZOL C11Z-CN = 90/10 (weight ratio) |

### [Example B-1]: Laminate Member (G-PPS-1)

The thermal transfer surface-modifying sheet (1) was placed on a glass fiber reinforced polyphenylene sulfide (manufactured by Nippon Testpanel Co., Ltd., G-PPS, dimension: width of 25 mm × length of 100 mm × thickness of 2 mm) so that the easy adherence layer side becomes the inner side, heating press (270°C × 10 min.) was performed, the easy adherence layer was heat-welded to the surface of glass fiber reinforced PPS, the release sheet was removed, the surface treatment was performed, and a laminate member (G-PPS-1) was manufactured.

### [Example B-2]: Laminate Member (G-PPS-2)

The surface treatment was performed in the same manner as in Example B-1, except that the thermal transfer surface-modifying sheet (1) was changed to the thermal transfer surface-modifying sheet (2), and a laminate member (G-PPS-2) was manufactured.

### [Example B-3]: Laminate Member (G-PPS-3)

The surface treatment was performed in the same manner as in Example B-1, except that the thermal transfer surface-modifying sheet (1) was changed to the thermal transfer surface-modifying sheet (3), and a laminate member (G-PPS-3) was manufactured.

### [Example B-4]: Laminate Member (G-PPS-4)

The surface treatment was performed in the same manner as in Example B-1, except that the thermal transfer surface-modifying sheet (1) was changed to the thermal transfer surface-modifying sheet (4), and a laminate member (G-PPS-4) was manufactured.

### [Example C-1]: Laminate Member (C-PPS-1)

The thermal transfer surface-modifying sheet (1) was placed on a carbon fiber reinforced polyphenylene sulfide (manufactured by Nippon Testpanel Co., Ltd., C-PPS, dimension: width of 25 mm × length of 100 mm × thickness of 2 mm) so that the easy adherence layer side becomes the inner side, heating press (270°C × 10 min.) was performed, the easy adherence layer was heat-welded to the surface of the carbon fiber reinforced PPS, the release sheet was removed, the surface treatment was performed, and a laminate member (C-PPS-1) was manufactured.

### [Example C-1']: Laminate Member (C-PPS-1')

The surface treatment was performed in the same manner as in Example C-1, except that the conditions of the heating press were changed to 250°C × 10 min., and a laminate member (C-PPS-1') was manufactured.

### [Example C-1"]: Laminate Member (C-PPS-1")

The surface treatment was performed in the same manner as in Example C-1, except that the conditions of the heating press were changed to 300°C × 10 min., and a laminate member (C-PPS-1") was manufactured.

### [Example C-2]: Laminate Member (C-PPS-2)

The surface treatment was performed in the same manner as in Example C-1, except that the thermal transfer surface-modifying sheet (1) was changed to the thermal transfer surface-modifying sheet (2), and a laminate member (C-PPS-2) was manufactured.

### [Example C-3]: Laminate Member (C-PPS-3)

The surface treatment was performed in the same manner as in Example C-1, except that the thermal transfer surface-modifying sheet (1) was changed to the thermal transfer surface-modifying sheet (3), and a laminate member (C-PPS-3) was manufactured.

### [Example C-4]: Laminate Member (C-PPS-4)

The surface treatment was performed in the same manner as in Example C-1, except that the thermal transfer surface-modifying sheet (1) was changed to the thermal transfer surface-modifying sheet (4), and a laminate member (C-PPS-4) was manufactured.

### [Comparative Example B-1]: Laminate Member (G-PPS-5)

The resin (1) was dissolved in hot toluene (60°C) and cooled to room temperature, and a solution having a concentration of 5% by weight was prepared.

The glass fiber reinforced polyphenylene sulfide (manufactured by Nippon Testpanel Co., Ltd., G-PPS, dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (G-PPS-5) was manufactured.

### [Comparative Example B-2]: Laminate Member (G-PPS-6)

The surface treatment was performed in the same manner as in Comparative Example B-1, except that the resin (1) was changed to the resin (2), and a laminate member (G-PPS-6) was manufactured.

### [Comparative Example B-3]: Laminate Member (G-PPS-7)

The surface treatment was performed in the same manner as in Comparative Example B-1, except that the resin (1) was changed to the resin (3), and a laminate member (G-PPS-7) was manufactured.

### [Comparative Example B-4]: Laminate Member (G-PPS-8)

The surface treatment was performed in the same manner as in Comparative Example B-1, except that the resin (1) was changed to the resin (4) and hot toluene (60°C) was changed to methanol (room temperature), and a laminate member (G-PPS-8) was manufactured.

### [Comparative Example C-1]: Laminate Member (C-PPS-5)

The resin (1) was dissolved in hot toluene (60°C) and cooled to room temperature, and a solution having a concentration of 5% by weight was prepared.

The carbon fiber reinforced polyphenylene sulfide (manufactured by Nippon Testpanel Co., Ltd., C-PPS, dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (C-PPS-5) was manufactured.

### [Comparative Example C-2]: Laminate Member (C-PPS-6)

The surface treatment was performed in the same manner as in Comparative Example C-1, except that the resin (1) was changed to the resin (2), and a laminate member (C-PPS-6) was manufactured.

### [Comparative Example C-3]: Laminate Member (C-PPS-7)

The surface treatment was performed in the same manner as in Comparative Example C-1, except that the resin (1) was changed to the resin (3), and a laminate member (C-PPS-7) was manufactured.

### [Comparative Example C-4]: Laminate Member (C-PPS-8)

The surface treatment was performed in the same manner as in Comparative Example C-1, except that the resin (1) was changed to the resin (4) and hot toluene (60°C) was changed to methanol (room temperature), and a laminate member (C-PPS-8) was manufactured.

### [Example B-5]: Laminate Member (G-PPS-9)

The laminate member (G-PPS-5) manufactured in Comparative Example B-1 was subjected to heating press (270°C × 10 min.), the thermal treatment was performed, the surface treatment was performed, and a laminate member (G-PPS-9) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example B-6]: Laminate Member (G-PPS-10)

The laminate member (G-PPS-6) manufactured in Comparative Example B-2 was subjected to heating press (270°C × 10 min.), the thermal treatment was performed, the surface treatment was performed, and a laminate member (G-PPS-10) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example B-7]: Laminate Member (G-PPS-11)

The laminate member (G-PPS-7) manufactured in Comparative Example B-3 was subjected to heating press (270°C × 10 min.), the thermal treatment was performed, the surface treatment was performed, and a laminate member (G-PPS-11) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example B-8]: Laminate Member (G-PPS-12)

The laminate member (G-PPS-8) manufactured in Comparative Example B-4 was subjected to heating press (270°C × 10 min.), the thermal treatment was performed, the surface treatment was performed, and a laminate member (G-PPS-12) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-5]: Laminate Member (C-PPS-9)

The laminate member (C-PPS-5) manufactured in Comparative Example C-1 was subjected to heating press (270°C × 10 min.), the thermal treatment was performed, the surface treatment was performed, and a laminate member (C-PPS-9) was manufactured. The heating press was performed by sandwiching a release sheet (manufactured by Nitto Denko Corporation, NITOFLON No. 900UL, thickness of 0.18 mm) between a press plate and an adherend (fiber reinforced resin).

### [Example C-5']: Laminate Member (C-PPS-9')

The surface treatment was performed in the same manner as in Example C-5, except that the conditions of the heating press were changed to 250°C × 10 min., and a laminate member (C-PPS-9') was manufactured.

### [Example C-5"]: Laminate Member (C-PPS-9")

The surface treatment was performed in the same manner as in Example C-5, except that the conditions of the heating press were changed to 300°C × 10 min., and a laminate member (C-PPS-9") was manufactured.

### [Example C-6]: Laminate Member (C-PPS-10)

The laminate member (C-PPS-6) manufactured in Comparative Example C-2 was subjected to heating press (270°C × 10 min.), the thermal treatment was performed, the surface treatment was performed, and a laminate member (C-PPS-10) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-7]: Laminate Member (C-PPS-11)

The laminate member (C-PPS-7) manufactured in Comparative Example C-3 was subjected to heating press (270°C × 10 min.), the thermal treatment was performed, the surface treatment was performed, and a laminate member (C-PPS-11) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-8]: Laminate Member (C-PPS-12)

The laminate member (C-PPS-8) manufactured in Comparative Example C-4 was subjected to heating press (270°C × 10 min.), the thermal treatment was performed, the surface treatment was performed, and a laminate member (C-PPS-12) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-9]: Laminate Member (C-PPS-13)

The surface treatment was performed in the same manner as in Example C-1, except that the thermal transfer surface-modifying sheet (1) was changed to the thermal transfer surface-modifying sheet (5) and the conditions of the heating press were changed to 290°C × 1 min., and a laminate member (C-PPS-13) was manufactured.

### [Example C-10]: Laminate Member (C-PPS-14)

The surface treatment was performed in the same manner as in Example C-1, except that the thermal transfer surface-modifying sheet (1) was changed to the thermal transfer surface-modifying sheet (6) and the conditions of the heating press were changed to 290°C × 1 min., and a laminate member (C-PPS-14) was manufactured.

### [Example C-11]: Laminate Member (C-PPS-15)

The surface treatment was performed in the same manner as in Example C-1, except that the thermal transfer surface-modifying sheet (1) was changed to the thermal transfer surface-modifying sheet (7) and the conditions of the heating press were changed to 290°C × 1 min., and a laminate member (C-PPS-15) was manufactured.

### [Example C-12]: Laminate Member (C-PPS-16)

The surface treatment was performed in the same manner as in Example C-1, except that the thermal transfer surface-modifying sheet (1) was changed to the thermal transfer surface-modifying sheet (8) and the conditions of the heating press were changed to 290°C × 1 min., and a laminate member (C-PPS-16) was manufactured.

### [Example C-13]: Laminate Member (C-PPS-17)

The surface treatment was performed in the same manner as in Example C-1, except that the thermal transfer surface-modifying sheet (1) was changed to the thermal transfer surface-modifying sheet (9) and the conditions of the heating press were changed to 290°C × 1 min., and a laminate member (C-PPS-17) was manufactured.

### [Example C-14]: Laminate Member (C-PPS-18)

The surface treatment was performed in the same manner as in Example C-1, except that the thermal transfer surface-modifying sheet (1) was changed to the thermal transfer surface-modifying sheet (10) and the conditions of the heating press were changed to 290°C × 1 min., and a laminate member (C-PPS-18) was manufactured.

### [Example C-15]: Laminate Member (C-PPS-19)

The surface treatment was performed in the same manner as in Example C-1, except that the thermal transfer surface-modifying sheet (1) was changed to the thermal transfer surface-modifying sheet (11) and the conditions of the heating press were changed to 290°C × 1 min., and a laminate member (C-PPS-19) was manufactured.

### [Example C-16]: Laminate Member (C-PPS-20)

The surface treatment was performed in the same manner as in Example C-1, except that the thermal transfer surface-modifying sheet (1) was changed to the thermal transfer surface-modifying sheet (12) and the conditions of the heating press were changed to 290°C × 1 min., and a laminate member (C-PPS-20) was manufactured.

### [Example C-17]: Laminate Member (C-PPS-21)

The surface treatment was performed in the same manner as in Example C-1, except that the thermal transfer surface-modifying sheet (1) was changed to the thermal transfer surface-modifying sheet (13) and the conditions of the heating press were changed to 290°C × 1 min., and a laminate member (C-PPS-21) was manufactured.

### [Example C-18]: Laminate Member (C-PPS-22)

The surface treatment was performed in the same manner as in Example C-1, except that the thermal transfer surface-modifying sheet (1) was changed to the thermal transfer surface-modifying sheet (14) and the conditions of the heating press were changed to 290°C × 1 min., and a laminate member (C-PPS-22) was manufactured.

### [Example C-19]: Laminate Member (C-PPS-23)

The surface treatment was performed in the same manner as in Example C-1, except that the thermal transfer surface-modifying sheet (1) was changed to the thermal transfer surface-modifying sheet (15) and the conditions of the heating press were changed to 290°C × 1 min., and a laminate member (C-PPS-23) was manufactured.

### [Example C-20]: Laminate Member (C-PPS-24)

The surface treatment was performed in the same manner as in Example C-1, except that the thermal transfer surface-modifying sheet (1) was changed to the thermal transfer surface-modifying sheet (16) and the conditions of the heating press were changed to 290°C × 1 min., and a laminate member (C-PPS-24) was manufactured.

### [Example C-21]: Laminate Member (C-PPS-25)

The surface treatment was performed in the same manner as in Example C-1, except that the thermal transfer surface-modifying sheet (1) was changed to the thermal transfer surface-modifying sheet (17) and the conditions of the heating press were changed to 290°C × 1 min., and a laminate member (C-PPS-25) was manufactured.

### [Example C-22]: Laminate Member (C-PPS-26)

The surface treatment was performed in the same manner as in Example C-1, except that the thermal transfer surface-modifying sheet (1) was changed to the thermal transfer surface-modifying sheet (18) and the conditions of the heating press were changed to 290°C × 1 min., and a laminate member (C-PPS-26) was manufactured.

### [Example C-23]: Laminate Member (C-PPS-27)

The surface treatment was performed in the same manner as in Example C-1, except that the thermal transfer surface-modifying sheet (1) was changed to the thermal transfer surface-modifying sheet (19) and the conditions of the heating press were changed to 290°C × 1 min., and a laminate member (C-PPS-27) was manufactured.

### [Example C-24]: Laminate Member (C-PPS-28)

The surface treatment was performed in the same manner as in Example C-1, except that the thermal transfer surface-modifying sheet (1) was changed to the thermal transfer surface-modifying sheet (20) and the conditions of the heating press were changed to 290°C × 1 min., and a laminate member (C-PPS-28) was manufactured.

### [Example C-25]: Laminate Member (C-PPS-29)

The surface treatment was performed in the same manner as in Example C-1, except that the thermal transfer surface-modifying sheet (1) was changed to the thermal transfer surface-modifying sheet (21) and the conditions of the heating press were changed to 290°C × 1 min., and a laminate member (C-PPS-29) was manufactured.

### [Example C-26]: Laminate Member (C-PPS-30)

The surface treatment was performed in the same manner as in Example C-1, except that the thermal transfer surface-modifying sheet (1) was changed to the thermal transfer surface-modifying sheet (22) and the conditions of the heating press were changed to 290°C × 1 min., and a laminate member (C-PPS-30) was manufactured.

### [Example C-27]: Laminate Member (C-PPS-31)

The surface treatment was performed in the same manner as in Example C-1, except that the thermal transfer surface-modifying sheet (1) was changed to the thermal transfer surface-modifying sheet (23) and the conditions of the heating press were changed to 290°C × 1 min., and a laminate member (C-PPS-31) was manufactured.

### [Example C-28]: Laminate Member (C-PPS-32)

A laminate member manufactured by performing the surface treatment in the same manner as in Comparative Example C-1, except that the resin (1) was changed to the resin (5), was subjected to heating press (290°C × 1 min.), thermal treatment was performed, the surface treatment was performed, and a laminate member (C-PPS-32) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-29]: Laminate Member (C-PPS-33)

A laminate member manufactured by performing the surface treatment in the same manner as in Comparative Example C-1, except that the resin (1) was changed to the resin (6), was subjected to heating press (290°C × 1 min.), thermal treatment was performed, the surface treatment was performed, and a laminate member (C-PPS-33) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-30]: Laminate Member (C-PPS-34)

A laminate member manufactured by performing the surface treatment in the same manner as in Comparative Example C-1, except that the resin (1) was changed to the resin (7), was subjected to heating press (290°C × 1 min.), thermal treatment was performed, the surface treatment was performed, and a laminate member (C-PPS-34) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-31]: Laminate Member (C-PPS-35)

A laminate member manufactured by performing the surface treatment in the same manner as in Comparative Example C-1, except that the resin (1) was changed to the resin (8), was subjected to heating press (290°C × 1 min.), thermal treatment was performed, the surface treatment was performed, and a laminate member (C-PPS-35) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-32]: Laminate Member (C-PPS-36)

A laminate member manufactured by performing the surface treatment in the same manner as in Comparative Example C-1, except that the resin (1) was changed to the resin (9), was subjected to heating press (290°C × 1 min.), thermal treatment was performed, the surface treatment was performed, and a laminate member (C-PPS-36) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-33]: Laminate Member (C-PPS-37)

A laminate member manufactured by performing the surface treatment in the same manner as in Comparative Example C-1, except that the resin (1) was changed to the resin (10), was subjected to heating press (290°C × 1 min.), thermal treatment was performed, the surface treatment was performed, and a laminate member (C-PPS-37) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-34]: Laminate Member (C-PPS-38)

A laminate member manufactured by performing the surface treatment in the same manner as in Comparative Example C-1, except that the resin (1) was changed to the resin (11), was subjected to heating press (290°C × 1 min.), thermal treatment was performed, the surface treatment was performed, and a laminate member (C-PPS-38) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-35]: Laminate Member (C-PPS-39)

A laminate member manufactured by performing the surface treatment in the same manner as in Comparative Example C-1, except that the resin (1) was changed to the resin (12), was subjected to heating press (290°C × 1 min.), thermal treatment was performed, the surface treatment was performed, and a laminate member (C-PPS-39) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-36]: Laminate Member (C-PPS-40)

A laminate member manufactured by performing the surface treatment in the same manner as in Comparative Example C-1, except that the resin (1) was changed to the resin (13), was subjected to heating press (290°C × 1 min.), thermal treatment was performed, the surface treatment was performed, and a laminate member (C-PPS-40) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-37]: Laminate Member (C-PPS-41)

A laminate member manufactured by performing the surface treatment in the same manner as in Comparative Example C-1, except that the resin (1) was changed to the resin (14), was subjected to heating press (290°C × 1 min.), thermal treatment was performed, the surface treatment was performed, and a laminate member (C-PPS-41) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-38]: Laminate Member (C-PPS-42)

A laminate member manufactured by performing the surface treatment in the same manner as in Comparative Example C-1, except that the resin (1) was changed to the resin (15), was subjected to heating press (290°C × 1 min.), thermal treatment was performed, the surface treatment was performed, and a laminate member (C-PPS-42) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-39]: Laminate Member (C-PPS-43)

A laminate member manufactured by performing the surface treatment in the same manner as in Comparative Example C-1, except that the resin (1) was changed to the resin (16), was subjected to heating press (290°C × 1 min.), thermal treatment was performed, the surface treatment was performed, and a laminate member (C-PPS-43) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-40]: Laminate Member (C-PPS-44)

A laminate member manufactured by performing the surface treatment in the same manner as in Comparative Example C-1, except that the resin (1) was changed to the resin (17), was subjected to heating press (290°C × 1 min.), thermal treatment was performed, the surface treatment was performed, and a laminate member (C-PPS-44) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-41]: Laminate Member (C-PPS-45)

A laminate member manufactured by performing the surface treatment in the same manner as in Comparative Example C-1, except that the resin (1) was changed to the resin (19), was subjected to heating press (290°C × 1 min.), thermal treatment was performed, the surface treatment was performed, and a laminate member (C-PPS-45) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-42]: Laminate Member (C-PPS-46)

A laminate member manufactured by performing the surface treatment in the same manner as in Comparative Example C-1, except that the resin (1) was changed to a resin (24) (ARUFON (registered trademark) UH-2041 (hydroxyl group-containing acrylic polymer) manufactured by Toagosei Co., Ltd.), was subjected to heating press (290°C × 1 min.), thermal treatment was performed, the surface treatment was performed, and a laminate member (C-PPS-46) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-43]: Laminate Member (C-PPS-47)

A laminate member manufactured by performing the surface treatment in the same manner as in Comparative Example C-1, except that the resin (1) was changed to a resin (25) (ARUFON (registered trademark) UH-2170 (hydroxyl group-containing acrylic polymer) manufactured by Toagosei Co., Ltd.), was subjected to heating press (290°C × 1 min.), thermal treatment was performed, the surface treatment was performed, and a laminate member (C-PPS-47) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-44]: Laminate Member (C-PPS-48)

A laminate member manufactured by performing the surface treatment in the same manner as in Comparative Example C-1, except that the resin (1) was changed to a resin (26) (ARUFON (registered trademark) UH-2190 (hydroxyl group-containing acrylic polymer) manufactured by Toagosei Co., Ltd.), was subjected to heating press (290°C × 1 min.), thermal treatment was performed, the surface treatment was performed, and a laminate member (C-PPS-48) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-45]: Laminate Member (C-PPS-49)

A laminate member manufactured by performing the surface treatment in the same manner as in Comparative Example C-1, except that the resin (1) was changed to a resin (27) (ARUFON (registered trademark) UC-3000 (carboxyl group-containing acrylic polymer) manufactured by Toagosei Co., Ltd.), was subjected to heating press (290°C × 1 min.), thermal treatment was performed, the surface treatment was performed, and a laminate member (C-PPS-49) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-46]: Laminate Member (C-PPS-50)

A laminate member manufactured by performing the surface treatment in the same manner as in Comparative Example C-1, except that the resin (1) was changed to a resin (28) (ARUFON (registered trademark) UC-3080 (carboxyl group-containing acrylic polymer) manufactured by Toagosei Co., Ltd.), was subjected to heating press (290°C × 1 min.), thermal treatment was performed, the surface treatment was performed, and a laminate member (C-PPS-50) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-47]: Laminate Member (C-PPS-51)

A laminate member manufactured by performing the surface treatment in the same manner as in Comparative Example C-1, except that the resin (1) was changed to a resin (29) (ARUFON (registered trademark) UC-3150 (carboxyl group-containing acrylic polymer) manufactured by Toagosei Co., Ltd.), was subjected to heating press (290°C × 1 min.), thermal treatment was performed, the surface treatment was performed, and a laminate member (C-PPS-51) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-48]: Laminate Member (C-PPS-52)

A laminate member manufactured by performing the surface treatment in the same manner as in Comparative Example C-1, except that the resin (1) was changed to a material of the easy adherence layer (30) (ARUFON (registered trademark) SP-200 (polyethyleneimine) manufactured by Toagosei Co., Ltd.), was subjected to heating press (290°C × 1 min.), thermal treatment was performed, the surface treatment was performed, and a laminate member (C-PPS-52) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-49]: Laminate Member (C-PPS-53)

A laminate member manufactured by performing the surface treatment in the same manner as in Comparative Example C-1, except that the resin (1) was changed to a material of the easy adherence layer (31) (CUREZOL 2P4MHZ-PW (imidazole-based epoxy resin curing agent) manufactured by Shikoku Chemicals Corporation), was subjected to heating press (290°C × 1 min.), thermal treatment was performed, the surface treatment was performed, and a laminate member (C-PPS-53) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-50]: Laminate Member (C-PPS-54)

A laminate member manufactured by performing the surface treatment in the same manner as in Comparative Example C-1, except that the resin (1) was changed to a material of the easy adherence layer (32) (NAFION manufactured by Wako Pure Chemical Industries, Ltd.), was subjected to heating press (290°C × 1 min.), thermal treatment was performed, the surface treatment was performed, and a laminate member (C-PPS-54) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example C-51]: Laminate Member (C-PPS-55)

A laminate member manufactured by performing the surface treatment in the same manner as in Comparative Example C-1, except that the resin (1) was changed to a material of the easy adherence layer (32) (CUREZOL C11Z-CN (imidazole-type epoxy resin curing agent) manufactured by Shikoku Chemicals Corporation), was subjected to heating press (290°C × 1 min.), thermal treatment was performed, the surface treatment was performed, and a laminate member (C-PPS-55) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example 1]: Bonded Structure (1)

The two laminate members (G-PPS-1) obtained in Example B-1 were bonded to each other by the (bonding method 1) and a bonded structure (1) was manufactured. The result is shown in Table 2.

### [Example 2]: Bonded Structure (2)

The two laminate members (G-PPS-2) obtained in Example B-2 were bonded to each other by the (bonding method 1) and a bonded structure (2) was manufactured. The result is shown in Table 2.

### [Example 3]: Bonded Structure (3)

The two laminate members (G-PPS-3) obtained in Example B-3 were bonded to each other by the (bonding method 1) and a bonded structure (3) was manufactured. The result is shown in Table 2.

### [Example 4]: Bonded Structure (4)

The two laminate members (G-PPS-4) obtained in Example B-4 were bonded to each other by the (bonding method 1) and a bonded structure (4) was manufactured. The result is shown in Table 2.

### [Example 5]: Bonded Structure (5)

The two laminate members (C-PPS-1) obtained in Example C-1 were bonded to each other by the (bonding method 1) and a bonded structure (5) was manufactured. The result is shown in Table 2.

### [Example 6]: Bonded Structure (6)

The two laminate members (C-PPS-1') obtained in Example C-1' were bonded to each other by the (bonding method 1) and a bonded structure (6) was manufactured. The result is shown in Table 2.

### [Example 7]: Bonded Structure (7)

The two laminate members (C-PPS-1") obtained in Example C-1" were bonded to each other by the (bonding method 1) and a bonded structure (7) was manufactured. The result is shown in Table 2.

### [Example 8]: Bonded Structure (8)

The two laminate members (C-PPS-2) obtained in Example C-2 were bonded to each other by the (bonding method 1) and a bonded structure (8) was manufactured. The result is shown in Table 2.

### [Example 9]: Bonded Structure (9)

The two laminate members (C-PPS-3) obtained in Example C-3 were bonded to each other by the (bonding method 1) and a bonded structure (9) was manufactured. The result is shown in Table 2.

### [Example 10]: Bonded Structure (10)

The two laminate members (C-PPS-4) obtained in Example C-4 were bonded to each other by the (bonding method 1) and a bonded structure (10) was manufactured. The result is shown in Table 2.

### [Example 11]: Bonded Structure (11)

The two laminate members (C-PPS-2) obtained in Example C-2 were bonded to each other by the (bonding method 2) and a bonded structure (11) was manufactured. The result is shown in Table 2.

### [Example 12]: Bonded Structure (12)

The two laminate members (G-PPS-9) obtained in Example B-5 were bonded to each other by the (bonding method 1) and a bonded structure (12) was manufactured. The result is shown in Table 2.

### [Example 13]: Bonded Structure (13)

The two laminate members (G-PPS-10) obtained in Example B-6 were bonded to each other by the (bonding method 1) and a bonded structure (13) was manufactured. The result is shown in Table 2.

### [Example 14]: Bonded Structure (14)

The two laminate members (G-PPS-11) obtained in Example B-7 were bonded to each other by the (bonding method 1) and a bonded structure (14) was manufactured. The result is shown in Table 2.

### [Example 15]: Bonded Structure (15)

The two laminate members (G-PPS-12) obtained in Example B-8 were bonded to each other by the (bonding method 1) and a bonded structure (15) was manufactured. The result is shown in Table 2.

### [Example 16]: Bonded Structure (16)

The two laminate members (C-PPS-9) obtained in Example C-5 were bonded to each other by the (bonding method 1) and a bonded structure (16) was manufactured. The result is shown in Table 2.

### [Example 17]: Bonded Structure (17)

The two laminate members (C-PPS-9') obtained in Example C-5' were bonded to each other by the (bonding method 1) and a bonded structure (17) was manufactured. The result is shown in Table 2.

### [Example 18]: Bonded Structure (18)

The two laminate members (C-PPS-9") obtained in Example C-5" were bonded to each other by the (bonding method 1) and a bonded structure (18) was manufactured. The result is shown in Table 2.

### [Example 19]: Bonded Structure (19)

The two laminate members (C-PPS-10) obtained in Example C-6 were bonded to each other by the (bonding method 1) and a bonded structure (19) was manufactured. The result is shown in Table 2.

### [Example 20]: Bonded Structure (20)

The two laminate members (C-PPS-11) obtained in Example C-7 were bonded to each other by the (bonding method 1) and a bonded structure (20) was manufactured. The result is shown in Table 2.

### [Example 21]: Bonded Structure (21)

The two laminate members (C-PPS-12) obtained in Example C-8 were bonded to each other by the (bonding method 1) and a bonded structure (21) was manufactured. The result is shown in Table 2.

### [Example 22]: Bonded Structure (22)

The two laminate members (C-PPS-10) obtained in Example C-6 were bonded to each other by the (bonding method 2) and a bonded structure (22) was manufactured. The result is shown in Table 2.

### [Comparative Example 1]: Bonded Structure (C1)

The two glass fiber reinforced polyphenylene sulfides (G-PPS manufactured by Nippon Testpanel Co., Ltd., dimension: width of 25 mm × length of 100 mm × thickness of 2 mm) were bonded to each other by the (bonding method 1) and a bonded structure (C1) was manufactured. The result is shown in Table 3.

### [Comparative Example 2]: Bonded Structure (C2)

The two laminate members (G-PPS-5) obtained in Comparative Example B-1 were bonded to each other by the (bonding method 1) and a bonded structure (C2) was manufactured. The result is shown in Table 3.

### [Comparative Example 3]: Bonded Structure (C3)

The two laminate members (G-PPS-6) obtained in Comparative Example B-2 were bonded to each other by the (bonding method 1) and a bonded structure (C3) was manufactured. The result is shown in Table 3.

### [Comparative Example 4]: Bonded Structure (C4)

The two laminate members (G-PPS-7) obtained in Comparative Example B-3 were bonded to each other by the (bonding method 1) and a bonded structure (C4) was manufactured. The result is shown in Table 3.

### [Comparative Example 5]: Bonded Structure (C5)

The two laminate members (G-PPS-8) obtained in Comparative Example B-4 were bonded to each other by the (bonding method 1) and a bonded structure (C5) was manufactured. The result is shown in Table 3.

### [Comparative Example 6]: Bonded Structure (C6)

The two carbon fiber reinforced polyphenylene sulfides (C-PPS manufactured by Nippon Testpanel Co., Ltd., dimension: width of 25 mm × length of 100 mm × thickness of 2 mm) were bonded to each other by the (bonding method 1) and a bonded structure (C6) was manufactured. The result is shown in Table 3.

### [Comparative Example 7]: Bonded Structure (C7)

The two carbon fiber reinforced polyphenylene sulfides (C-PPS manufactured by Nippon Testpanel Co., Ltd., dimension: width of 25 mm × length of 100 mm × thickness of 2 mm) were bonded to each other by the (bonding method 2) and a bonded structure (C7) was manufactured. The result is shown in Table 3.

### [Comparative Example 8]: Bonded Structure (C8)

The two laminate members (C-PPS-5) obtained in Comparative Example C-1 were bonded to each other by the (bonding method 1) and a bonded structure (C8) was manufactured. The result is shown in Table 3.

### [Comparative Example 9]: Bonded Structure (C9)

The two laminate members (C-PPS-6) obtained in Comparative Example C-2 were bonded to each other by the (bonding method 1) and a bonded structure (C9) was manufactured. The result is shown in Table 3.

### [Comparative Example 10]: Bonded Structure (C10)

The two laminate members (C-PPS-7) obtained in Comparative Example C-3 were bonded to each other by the (bonding method 1) and a bonded structure (C10) was manufactured. The result is shown in Table 3.

### [Comparative Example 11]: Bonded Structure (C11)

The two laminate members (C-PPS-8) obtained in Comparative Example C-4 were bonded to each other by the (bonding method 1) and a bonded structure (C11) was manufactured. The result is shown in Table 3.

**[Table 2]**

| | Laminate member | Bonding method | Surface treatment method of laminate member | Shear adhesiveness (MPa) | Fracture aspect |
|---|---|---|---|---|---|
| Example 1 | G-PPS-1 | 1 | thermal transfer surface-modifying sheet + Heating at temperature equal to or higher than (T - 50)°C (T: melting point of thermoplastic resin (°C)) | 9.0 | Adherend fracture |
| Example 2 | G-PPS-2 | 1 | | 9.5 | |
| Example 3 | G-PPS-3 | 1 | | 9.1 | |
| Example 4 | G-PPS-4 | 1 | | 6.0 | Boundary surface fracture and adhesive fracture |
| Example 5 | C-PPS-1 | 1 | | 12.0 | |
| Example 6 | C-PPS-1' | 1 | | 12.2 | |
| Example 7 | C-PPS-1" | 1 | | 13.0 | |
| Example 8 | C-PPS-2 | 1 | | 13.4 | |
| Example 9 | C-PPS-3 | 1 | | 12.6 | |
| Example 10 | C-PPS-4 | 1 | | 9.1 | |
| Example 11 | C-PPS-2 | 2 | | 19.1 | Adherend fracture |
| Example 12 | G-PPS-9 | 1 | Application of solution of material of easy adherence layer + Heating at temperature equal to or higher than (T - 50)°C (T: melting point of thermoplastic resin (°C)) | 9.0 | Adherend fracture |
| Example 13 | G-PPS-10 | 1 | | 9.3 | |
| Example 14 | G-PPS-11 | 1 | | 8.9 | |
| Example 15 | G-PPS-12 | 1 | | 9.5 | |
| Example 16 | C-PPS-9 | 1 | | 14.4 | Boundary surface fracture and adhesive fracture |
| Example 17 | C-PPS-9' | 1 | | 14.9 | |
| Example 18 | C-PPS-9" | 1 | | 15.5 | |
| Example 19 | C-PPS-10 | 1 | | 16.8 | |
| Example 20 | C-PPS-11 | 1 | | 15.1 | |
| Example 21 | C-PPS-12 | 1 | | 10.0 | |
| Example 22 | C-PPS-10 | 2 | | 26.3 | Adherend fracture |

**Table 3]**

| | Laminate member | Bonding method | Surface treatment method of laminate member | Shear adhesiveness (MPa) | Fracture aspect |
|---|---|---|---|---|---|
| Comparative Example 1 | G-PPS | 1 | Not treated | 2.5 | Boundary surface fracture |
| Comparative Example 2 | G-PPS-5 | 1 | Application of solution of material of easy adherence layer | 3.9 | |
| Comparative Example 3 | G-PPS-6 | 1 | | 4.5 | |
| Comparative Example 4 | G-PPS-7 | 1 | | 4.2 | |
| Comparative Example 5 | G-PPS-8 | 1 | | 2.5 | |
| Comparative Example 6 | C-PPS | 1 | Not treated | 5.9 | |
| Comparative Example 7 | C-PPS | 2 | | 6.2 | |
| Comparative Example 8 | C-PPS-5 | 1 | Application of solution of material of easy adherence layer | 7.6 | |
| Comparative Example 9 | C-PPS-6 | 1 | | 8.1 | |
| Comparative Example 10 | C-PPS-7 | 1 | | 7.8 | |
| Comparative Example 11 | C-PPS-8 | 1 | | 6.1 | |

### [Example 23]: Bonded Structure (23)

The two laminate members (C-PPS-13) obtained in Example C-9 were bonded to each other by the (bonding method 2) and a bonded structure (23) was manufactured. The result is shown in Table 4.

### [Example 24]: Bonded Structure (24)

The two laminate members (C-PPS-14) obtained in Example C-10 were bonded to each other by the (bonding method 2) and a bonded structure (24) was manufactured. The result is shown in Table 4.

### [Example 25]: Bonded Structure (25)

The two laminate members (C-PPS-15) obtained in Example C-11 were bonded to each other by the (bonding method 2) and a bonded structure (25) was manufactured. The result is shown in Table 4.

### [Example 26]: Bonded Structure (26)

The two laminate members (C-PPS-16) obtained in Example C-12 were bonded to each other by the (bonding method 2) and a bonded structure (26) was manufactured. The result is shown in Table 4.

### [Example 27]: Bonded Structure (27)

The two laminate members (C-PPS-17) obtained in Example C-13 were bonded to each other by the (bonding method 2) and a bonded structure (27) was manufactured. The result is shown in Table 4.

### [Example 28]: Bonded Structure (28)

The two laminate members (C-PPS-18) obtained in Example C-14 were bonded to each other by the (bonding method 2) and a bonded structure (28) was manufactured. The result is shown in Table 4.

### [Example 29]: Bonded Structure (29)

The two laminate members (C-PPS-19) obtained in Example C-15 were bonded to each other by the (bonding method 2) and a bonded structure (29) was manufactured. The result is shown in Table 4.

### [Example 30]: Bonded Structure (30)

The two laminate members (C-PPS-20) obtained in Example C-16 were bonded to each other by the (bonding method 2) and a bonded structure (30) was manufactured. The result is shown in Table 4.

### [Example 31]: Bonded Structure (31)

The two laminate members (C-PPS-21) obtained in Example C-17 were bonded to each other by the (bonding method 2) and a bonded structure (31) was manufactured. The result is shown in Table 4.

### [Example 32]: Bonded Structure (32)

The two laminate members (C-PPS-22) obtained in Example C-18 were bonded to each other by the (bonding method 2) and a bonded structure (32) was manufactured. The result is shown in Table 4.

### [Example 33]: Bonded Structure (33)

The two laminate members (C-PPS-23) obtained in Example C-19 were bonded to each other by the (bonding method 2) and a bonded structure (33) was manufactured. The result is shown in Table 4.

### [Example 34]: Bonded Structure (34)

The two laminate members (C-PPS-24) obtained in Example C-20 were bonded to each other by the (bonding method 2) and a bonded structure (34) was manufactured. The result is shown in Table 4.

### [Example 35]: Bonded Structure (35)

The two laminate members (C-PPS-25) obtained in Example C-21 were bonded to each other by the (bonding method 2) and a bonded structure (35) was manufactured. The result is shown in Table 4.

### [Example 36]: Bonded Structure (36)

The two laminate members (C-PPS-26) obtained in Example C-22 were bonded to each other by the (bonding method 2) and a bonded structure (36) was manufactured. The result is shown in Table 4.

### [Example 37]: Bonded Structure (37)

The two laminate members (C-PPS-27) obtained in Example C-23 were bonded to each other by the (bonding method 2) and a bonded structure (37) was manufactured. The result is shown in Table 4.

### [Example 38]: Bonded Structure (38)

The two laminate members (C-PPS-28) obtained in Example C-24 were bonded to each other by the (bonding method 2) and a bonded structure (38) was manufactured. The result is shown in Table 4.

### [Example 39]: Bonded Structure (39)

The two laminate members (C-PPS-29) obtained in Example C-25 were bonded to each other by the (bonding method 2) and a bonded structure (39) was manufactured. The result is shown in Table 4.

### [Example 40]: Bonded Structure (40)

The two laminate members (C-PPS-30) obtained in Example C-26 were bonded to each other by the (bonding method 2) and a bonded structure (40) was manufactured. The result is shown in Table 4.

### [Example 41]: Bonded Structure (41)

The two laminate members (C-PPS-31) obtained in Example C-27 were bonded to each other by the (bonding method 2) and a bonded structure (41) was manufactured. The result is shown in Table 4.

### [Example 42]: Bonded Structure (42)

The two laminate members (C-PPS-18) obtained in Example C-14 were bonded to each other by the (bonding method 1) and a bonded structure (42) was manufactured. The result is shown in Table 4.

### [Example 43]: Bonded Structure (43)

The two laminate members (C-PPS-18) obtained in Example C-14 were bonded to each other by the (bonding method 4) and a bonded structure (43) was manufactured. The result is shown in Table 4.

### [Example 44]: Bonded Structure (44)

The two laminate members (C-PPS-18) obtained in Example C-14 were bonded to each other by the (bonding method 5) and a bonded structure (44) was manufactured. The result is shown in Table 4.

### [Example 45]: Bonded Structure (45)

The two laminate members (C-PPS-18) obtained in Example C-14 were bonded to each other by the (bonding method 6) and a bonded structure (45) was manufactured. The result is shown in Table 4.

### [Example 46]: Bonded Structure (46)

The two laminate members (C-PPS-27) obtained in Example C-23 were bonded to each other by the (bonding method 1) and a bonded structure (46) was manufactured. The result is shown in Table 4.

### [Example 47]: Bonded Structure (47)

The two laminate members (C-PPS-27) obtained in Example C-23 were bonded to each other by the (bonding method 4) and a bonded structure (47) was manufactured. The result is shown in Table 4.

### [Example 48]: Bonded Structure (48)

The two laminate members (C-PPS-27) obtained in Example C-23 were bonded to each other by the (bonding method 5) and a bonded structure (48) was manufactured. The result is shown in Table 4.

### [Example 49]: Bonded Structure (49)

The two laminate members (C-PPS-27) obtained in Example C-23 were bonded to each other by the (bonding method 6) and a bonded structure (49) was manufactured. The result is shown in Table 4.

**[Table 4]**

| | Laminate member | Bonding method | Surface treatment method of laminate member | Shear adhesiveness (MPa) | Fracture aspect |
|---|---|---|---|---|---|
| Example 23 | C-PPS-13 | 2 | | 15.3 | |
| Example 24 | C-PPS-14 | 2 | | 18.5 | |
| Example 25 | C-PPS-15 | 2 | | 23.9 | |
| Example 26 | C-PPS-16 | 2 | | 20.2 | |
| Example 27 | C-PPS-17 | 2 | | 22.8 | |
| Example 28 | C-PPS-18 | 2 | | 30.0 | |
| Example 29 | C-PPS-19 | 2 | | 25.0 | |
| Example 30 | C-PPS-20 | 2 | | 30.6 | |
| Example 31 | C-PPS-21 | 2 | | 27.1 | |
| Example 32 | C-PPS-22 | 2 | | 23.2 | Adherend fracture |
| Example 33 | C-PPS-23 | 2 | Thermal transfer surface-modifying sheet + Heating at temperature equal to or higher than (T - 50)°C (T: melting point of thermoplastic resin (°C)) | 13.4 | |
| Example 34 | C-PPS-24 | 2 | | 24.1 | |
| Example 35 | C-PPS-25 | 2 | | 18.7 | |
| Example 36 | C-PPS-26 | 2 | | 31.1 | |
| Example 37 | C-PPS-27 | 2 | | 29.3 | |
| Example 38 | C-PPS-28 | 2 | | 27.2 | |
| Example 39 | C-PPS-29 | 2 | | 28.8 | |
| Example 40 | C-PPS-30 | 2 | | 26.5 | |
| Example 41 | C-PPS-31 | 2 | | 22.5 | |
| Example 42 | C-PPS-18 | 1 | | 30.5 | |
| Example 43 | C-PPS-18 | 4 | | 19.4 | Boundary surface fracture |
| Example 44 | C-PPS-18 | 5 | | 11.8 | |
| Example 45 | C-PPS-18 | 6 | | 1.1 | Adhesive fracture |
| Example 46 | C-PPS-27 | 1 | | 26.3 | Adherend fracture |
| Example 47 | C-PPS-27 | 4 | | 19.4 | Boundary surface fracture |
| Example 48 | C-PPS-27 | 5 | | 10.1 | |
| Example 49 | C-PPS-27 | 6 | | 0.46 | Adhesive fracture |

### [Example 50]: Bonded Structure (50)

The two laminate members (C-PPS-32) obtained in Example C-28 were bonded to each other by the (bonding method 2) and a bonded structure (50) was manufactured. The result is shown in Table 5.

### [Example 51]: Bonded Structure (51)

The two laminate members (C-PPS-33) obtained in Example C-29 were bonded to each other by the (bonding method 2) and a bonded structure (51) was manufactured. The result is shown in Table 5.

### [Example 52]: Bonded Structure (52)

The two laminate members (C-PPS-34) obtained in Example C-30 were bonded to each other by the (bonding method 2) and a bonded structure (52) was manufactured. The result is shown in Table 5.

### [Example 53]: Bonded Structure (53)

The two laminate members (C-PPS-35) obtained in Example C-31 were bonded to each other by the (bonding method 2) and a bonded structure (53) was manufactured. The result is shown in Table 5.

### [Example 54]: Bonded Structure (54)

The two laminate members (C-PPS-36) obtained in Example C-32 were bonded to each other by the (bonding method 2) and a bonded structure (54) was manufactured. The result is shown in Table 5.

### [Example 55]: Bonded Structure (55)

The two laminate members (C-PPS-37) obtained in Example C-33 were bonded to each other by the (bonding method 2) and a bonded structure (55) was manufactured. The result is shown in Table 5.

### [Example 56]: Bonded Structure (56)

The two laminate members (C-PPS-38) obtained in Example C-34 were bonded to each other by the (bonding method 2) and a bonded structure (56) was manufactured. The result is shown in Table 5.

### [Example 57]: Bonded Structure (57)

The two laminate members (C-PPS-39) obtained in Example C-35 were bonded to each other by the (bonding method 2) and a bonded structure (57) was manufactured. The result is shown in Table 5.

### [Example 58]: Bonded Structure (58)

The two laminate members (C-PPS-40) obtained in Example C-36 were bonded to each other by the (bonding method 2) and a bonded structure (58) was manufactured. The result is shown in Table 5.

### [Example 59]: Bonded Structure (59)

The two laminate members (C-PPS-41) obtained in Example C-37 were bonded to each other by the (bonding method 2) and a bonded structure (59) was manufactured. The result is shown in Table 5.

### [Example 60]: Bonded Structure (60)

The two laminate members (C-PPS-42) obtained in Example C-38 were bonded to each other by the (bonding method 2) and a bonded structure (60) was manufactured. The result is shown in Table 5.

### [Example 61]: Bonded Structure (61)

The two laminate members (C-PPS-43) obtained in Example C-39 were bonded to each other by the (bonding method 2) and a bonded structure (61) was manufactured. The result is shown in Table 5.

### [Example 62]: Bonded Structure (62)

The two laminate members (C-PPS-44) obtained in Example C-40 were bonded to each other by the (bonding method 2) and a bonded structure (62) was manufactured. The result is shown in Table 5.

### [Example 63]: Bonded Structure (63)

The two laminate members (C-PPS-45) obtained in Example C-41 were bonded to each other by the (bonding method 2) and a bonded structure (63) was manufactured. The result is shown in Table 5.

### [Example 64]: Bonded Structure (64)

The two laminate members (C-PPS-46) obtained in Example C-42 were bonded to each other by the (bonding method 2) and a bonded structure (64) was manufactured. The result is shown in Table 5.

### [Example 65]: Bonded Structure (65)

The two laminate members (C-PPS-47) obtained in Example C-43 were bonded to each other by the (bonding method 2) and a bonded structure (65) was manufactured. The result is shown in Table 5.

### [Example 66]: Bonded Structure (66)

The two laminate members (C-PPS-48) obtained in Example C-44 were bonded to each other by the (bonding method 2) and a bonded structure (66) was manufactured. The result is shown in Table 5.

### [Example 67]: Bonded Structure (67)

The two laminate members (C-PPS-49) obtained in Example C-45 were bonded to each other by the (bonding method 2) and a bonded structure (67) was manufactured. The result is shown in Table 5.

### [Example 68]: Bonded Structure (68)

The two laminate members (C-PPS-50) obtained in Example C-46 were bonded to each other by the (bonding method 2) and a bonded structure (68) was manufactured. The result is shown in Table 5.

### [Example 69]: Bonded Structure (69)

The two laminate members (C-PPS-51) obtained in Example C-47 were bonded to each other by the (bonding method 2) and a bonded structure (69) was manufactured. The result is shown in Table 5.

### [Example 70]: Bonded Structure (70)

The two laminate members (C-PPS-52) obtained in Example C-48 were bonded to each other by the (bonding method 2) and a bonded structure (70) was manufactured. The result is shown in Table 5.

### [Example 71]: Bonded Structure (71)

The two laminate members (C-PPS-53) obtained in Example C-49 were bonded to each other by the (bonding method 2) and a bonded structure (71) was manufactured. The result is shown in Table 5.

### [Example 72]: Bonded Structure (72)

The two laminate members (C-PPS-54) obtained in Example C-50 were bonded to each other by the (bonding method 2) and a bonded structure (72) was manufactured. The result is shown in Table 5.

### [Example 73]: Bonded Structure (73)

The two laminate members (C-PPS-55) obtained in Example C-51 were bonded to each other by the (bonding method 2) and a bonded structure (73) was manufactured. The result is shown in Table 5.

**Table 5**

| | Laminate member | Bonding method | Surface treatment method of laminate member | Shear adhesiveness (MPa) | Fracture aspect |
|---|---|---|---|---|---|
| Example 50 | C-PPS-32 | 2 | | 25.8 | |
| Example 51 | C-PPS-33 | 2 | | 28.3 | |
| Example 52 | C-PPS-34 | 2 | | 23.7 | |
| Example 53 | C-PPS-35 | 2 | | 20.8 | |
| Example 54 | C-PPS-36 | 2 | | 28.5 | |
| Example 55 | C-PPS-37 | 2 | | 24.8 | |
| Example 56 | C-PPS-38 | 2 | | 23.2 | |
| Example 57 | C-PPS-39 | 2 | | 27.3 | |
| Example 58 | C-PPS-40 | 2 | Application of solution of material of easy adherence layer + Heating at temperature equal to or higher than (T - 50)°C (T: melting point of thermoplastic resin (°C)) | 26.2 | |
| Example 59 | C-PPS-41 | 2 | | 26.0 | |
| Example 60 | C-PPS-42 | 2 | | 22.2 | |
| Example 61 | C-PPS-43 | 2 | | 27.8 | Adherend fracture |
| Example 62 | C-PPS-44 | 2 | | 25.9 | |
| Example 63 | C-PPS-45 | 2 | | 22.0 | |
| Example 64 | C-PPS-46 | 2 | | 26.8 | |
| Example 65 | C-PPS-47 | 2 | | 22.1 | |
| Example 66 | C-PPS-48 | 2 | | 25.6 | |
| Example 67 | C-PPS-49 | 2 | | 30.3 | |
| Example 68 | C-PPS-50 | 2 | | 28.5 | |
| Example 69 | C-PPS-51 | 2 | | 30.7 | |
| Example 70 | C-PPS-52 | 2 | | 24.0 | |
| Example 71 | C-PPS-53 | 2 | | 25.3 | |
| Example 72 | C-PPS-54 | 2 | | 24.3 | |
| Example 73 | C-PPS-55 | 2 | | 26.3 | |

### [Comparative Example C-5]: Laminate Member (C-PPS-56)

The surface treatment was performed in the same manner as in Comparative Example C-1, except that the resin (1) was changed to the resin (6) and hot toluene (60°C) was changed to methanol (room temperature), and a laminate member (C-PPS-56) was manufactured.

### [Comparative Example C-6]: Laminate Member (C-PPS-57)

The surface treatment was performed in the same manner as in Comparative Example C-1, except that the resin (1) was changed to the resin (19) and hot toluene (60°C) was changed to methanol (room temperature), and a laminate member (C-PPS-57) was manufactured.

### [Comparative Example C-7]: Laminate Member (C-PPS-58)

The surface treatment was performed in the same manner as in Comparative Example C-1, except that the resin (1) was changed to the material of the easy adherence layer (30) (EPOMIN (registered trademark) SP-200 (polyethyleneimine) manufactured by Nippon Shokubai Co., Ltd.) and hot toluene (60°C) was changed to methanol (room temperature), and a laminate member (C-PPS-58) was manufactured.

### [Comparative Example C-8]: Laminate Member (C-PPS-59)

The surface treatment was performed in the same manner as in Comparative Example C-1, except that the resin (1) was changed to the material of the easy adherence layer (32) (NAFION manufactured by Wako Pure Chemical Industries, Ltd.) and hot toluene (60°C) was changed to methanol (room temperature), and a laminate member (C-PPS-59) was manufactured.

### [Comparative Example C-9]: Laminate Member (C-PPS-60)

The surface treatment was performed in the same manner as in Comparative Example C-1, except that the resin (1) was changed to the material of the easy adherence layer (32) (CUREZOL C11Z-CN (imidazole-type epoxy resin curing agent) manufactured by Shikoku Chemicals Corporation) and hot toluene (60°C) was changed to methanol (room temperature), and a laminate member (C-PPS-60) was manufactured.

### [Comparative Example 12]: Bonded Structure (C12)

The two carbon fiber reinforced polyphenylene sulfides (C-PPS manufactured by Nippon Testpanel Co., Ltd., dimension: width of 25 mm × length of 100 mm × thickness of 2 mm) were bonded to each other by the (bonding method 4) and a bonded structure (C12) was manufactured. The result is shown in Table 6.

### [Comparative Example 13]: Bonded Structure (C13)

The two carbon fiber reinforced polyphenylene sulfides (C-PPS manufactured by Nippon Testpanel Co., Ltd., dimension: width of 25 mm × length of 100 mm × thickness of 2 mm) were bonded to each other by the (bonding method 5) and a bonded structure (C13) was manufactured. The result is shown in Table 6.

### [Comparative Example 14]: Bonded Structure (C14)

The two carbon fiber reinforced polyphenylene sulfides (C-PPS manufactured by Nippon Testpanel Co., Ltd., dimension: width of 25 mm × length of 100 mm × thickness of 2 mm) were bonded to each other by the (bonding method 6) and a bonded structure (C14) was manufactured. The result is shown in Table 6.

### [Comparative Example 15]: Bonded Structure (C15)

The two laminate members (C-PPS-56) obtained in Comparative Example C-5 were bonded to each other by the (bonding method 2) and a bonded structure (C15) was manufactured. The result is shown in Table 6.

### [Comparative Example 16]: Bonded Structure (C16)

The two laminate members (C-PPS-57) obtained in Comparative Example C-6 were bonded to each other by the (bonding method 2) and a bonded structure (C16) was manufactured. The result is shown in Table 6.

### [Comparative Example 17]: Bonded Structure (C17)

The two laminate members (C-PPS-58) obtained in Comparative Example C-7 were bonded to each other by the (bonding method 2) and a bonded structure (C17) was manufactured. The result is shown in Table 6.

### [Comparative Example 18]: Bonded Structure (C18)

The two laminate members (C-PPS-59) obtained in Comparative Example C-8 were bonded to each other by the (bonding method 2) and a bonded structure (C18) was manufactured. The result is shown in Table 6.

### [Comparative Example 19]: Bonded Structure (C19)

The two laminate members (C-PPS-60) obtained in Comparative Example C-9 were bonded to each other by the (bonding method 2) and a bonded structure (C19) was manufactured. The result is shown in Table 6.

**Table 6]**

| | Laminate member | Bonding method | Surface treatment method of laminate member | Shear adhesiveness (MPa) | Fracture aspect |
|---|---|---|---|---|---|
| Comparative Example 12 | C-PPS | 4 | Not treated | 11.0 | Boundary surface fracture |
| Comparative Example 13 | C-PPS | 5 | | 5.0 | |
| Comparative Example 14 | C-PPS | 6 | | 0.1 | |
| Comparative Example 15 | C-PPS-56 | 2 | Application of solution of material of easy adherence layer | 7.8 | |
| Comparative Example 16 | C-PPS-57 | 2 | | 8.2 | |
| Comparative Example 17 | C-PPS-58 | 2 | | 8.5 | |
| Comparative Example 18 | C-PPS-59 | 2 | | 8.7 | |
| Comparative Example 19 | C-PPS-60 | 2 | | 9.1 | |

### [Example A-24]: Thermal Transfer Surface-Modifying Sheet (24)

A resin (33) (MODIPER A5400 (ethylene/ethyl acrylate-graft-styrene/acrylonitrile copolymer) manufactured by NOF Corporation) was dissolved in hot toluene (60°C) and cooled to room temperature, and a solution having a concentration of 5% by weight was prepared.

A release sheet (NITOFLON No. 900UL manufactured by Nitto Denko Corporation (thickness of 0.18 mm)) was dipped in this solution having a concentration of 5% by weight and air-dried, drying was further performed with a constant temperature dryer at 100°C for 1 minute, and a thermal transfer surface-modifying sheet (24) which is a release sheet including an easy adherence layer was manufactured.

### [Example A-25]: Thermal Transfer Surface-Modifying Sheet (25)

A thermal transfer surface-modifying sheet (25) which is a release sheet including an easy adherence layer was manufactured in the same manner as in Example A-24, except that the resin (33) was changed to a resin (34) (MODIPER A6600 (ethylene/vinyl acetate-graft-modified methyl methacrylate copolymer) manufactured by NOF Corporation).

### [Example D-1]: Laminate Member (PP-1/Transfer)

The thermal transfer surface-modifying sheet (24) was placed on a PP plate (dimension: width of 25 mm × length of 100 mm × thickness of 2 mm) so that the easy adherence layer side becomes the inner side, heating press (120°C × 10 min.) was performed, the easy adherence layer was heat-welded to the surface of the PP plate, the release sheet was removed, the surface treatment was performed, and a laminate member (PP-1/transfer) was manufactured.

### [Example D-2]: Laminate Member (PP-2/Transfer)

The surface treatment was performed in the same manner as in Example D-1, except that the thermal transfer surface-modifying sheet (24) was changed to the thermal transfer surface-modifying sheet (25), and a laminate member (PP-2/transfer) was manufactured.

### [Comparative Example D-1]: Laminate Member (PP-1/Application)

The resin (33) was dissolved in hot toluene (60°C) and cooled to room temperature, and a solution having a concentration of 5% by weight was prepared.

A PP plate (dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (PP-1/application) was manufactured.

### [Comparative Example D-2]: Laminate Member (PP-2/Application)

The surface treatment was performed in the same manner as in Comparative Example D-1, except that the thermal transfer surface-modifying sheet (33) was changed to the thermal transfer surface-modifying sheet (34), and a laminate member (PP-2/application) was manufactured.

### [Example D-3]: Laminate Member (PP-1/Application and Heating)

The laminate member (PP-1/application) manufactured in Comparative Example D-1 was subjected to heating press (120°C × 10 min.), the thermal treatment was performed, the surface treatment was performed, and a laminate member (PP-1/application and heating) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example D-4]: Laminate Member (PP-2/Application and Heating)

The laminate member (PP-2/application) manufactured in Comparative Example D-2 was subjected to heating press (120°C × 10 min.), the thermal treatment was performed, the surface treatment was performed, and a laminate member (PP-2/application and heating) was manufactured. The heating press was performed by sandwiching a release sheet (NITOFLON No. 900UL manufactured by Nitto Denko Corporation, thickness of 0.18 mm) between a press plate and an adherend (fiber reinforced resin).

### [Example 74]: Bonded Structure (74)

The two laminate members (PP-1/transfer) obtained in Example D-1 were bonded to each other by the (bonding method 3) and a bonded structure (74) was manufactured. The result is shown in Table 7.

### [Example 75]: Bonded Structure (75)

The two laminate members (PP-2/transfer) obtained in Example D-2 were bonded to each other by the (bonding method 3) and a bonded structure (75) was manufactured. The result is shown in Table 7.

### [Example 76]: Bonded Structure (76)

The two laminate members (PP-1/application and heating) obtained in Example D-3 were bonded to each other by the (bonding method 3) and a bonded structure (76) was manufactured. The result is shown in Table 7.

### [Example 77]: Bonded Structure (77)

The two laminate members (PP-2/application and heating) obtained in Example D-4 were bonded to each other by the (bonding method 3) and a bonded structure (77) was manufactured. The result is shown in Table 7.

### [Comparative Example 20]: Bonded Structure (C20)

The two PP plates (dimension: width of 25 mm × length of 100 mm × thickness of 2 mm) were bonded to each other by the (bonding method 3) and a bonded structure (C20) was manufactured. The result is shown in Table 7.

### [Comparative Example 21]: Bonded Structure (C21)

The two laminate members (PP-1/application) obtained in Comparative Example D-1 were bonded to each other by the (bonding method 3) and a bonded structure (C21) was manufactured. The result is shown in Table 7.

### [Comparative Example 22]: Bonded Structure (C22)

The two laminate members (PP-2/application) obtained in Comparative Example D-2 were bonded to each other by the (bonding method 3) and a bonded structure (C22) was manufactured. The result is shown in Table 7.

**[Table 7]**

| | Laminate member | Bonding method | Surface treatment method of laminate member | Shear adhesiveness (kPa) | Fracture aspect |
|---|---|---|---|---|---|
| Example 74 | PP-1/transfer | 3 | Thermal transfer surface-modifying sheet + Heating at temperature equal to or higher than (T - 50)°C (T: melting point of thermoplastic resin (°C)) | 420 | Boundary surface fracture |
| Example 75 | PP-2/transfer | 3 | | 460 | |
| Example 76 | PP-1/heating and application | 3 | Application of solution of material of easy adherence layer + Heating at temperature equal to or higher than (T - 50)°C (T: melting point of thermoplastic resin (°C)) | 460 | |
| Example 77 | PP-2/heating and application | 3 | | 510 | |
| Comparative Example 20 | PP plate | 3 | Not treated | 30 | Boundary surface fracture |
| Comparative Example 21 | PP-1/application | 3 | Application of solution of material of easy adherence laver | 38 | |
| Comparative Example 22 | PP-2/application | 3 | | 41 | |

### [Example D-5]: Laminate Member (G-PP-1)

The thermal transfer surface-modifying sheet (6) was placed on a glass fiber reinforced polypropylene (G-PP manufactured by Nippon Testpanel Co., Ltd., dimension: width of 25 mm × length of 100 mm × thickness of 2 mm) so that the easy adherence layer side becomes the inner side, heating press (170°C × 1 min.) was performed, the easy adherence layer was heat-welded to the surface of the glass fiber reinforced PP, the release sheet was removed, the surface treatment was performed, and a laminate member (G-PP-1) was manufactured.

### [Example D-6]: Laminate Member (G-PP-2)

The surface treatment was performed in the same manner as in Example D-5, except that the thermal transfer surface-modifying sheet (6) was changed to the thermal transfer surface-modifying sheet (19), and a laminate member (G-PP-2) was manufactured.

### [Example D-7]: Laminate Member (G-PP-3)

The surface treatment was performed in the same manner as in Example D-5, except that the thermal transfer surface-modifying sheet (6) was changed to the thermal transfer surface-modifying sheet (10), and a laminate member (G-PP-3) was manufactured.

### [Comparative Example D-3]: Laminate Member (G-PP-4)

The resin (6) was dissolved in hot toluene (60°C) and cooled to room temperature, and a solution having a concentration of 5% by weight was prepared.

The glass fiber reinforced polypropylene (manufactured by Nippon Testpanel Co., Ltd., G-PP, dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (G-PP-4) was manufactured.

### [Comparative Example D-4]: Laminate Member (G-PP-5)

The surface treatment was performed in the same manner as in Comparative Example D-3, except that the resin (6) was changed to the resin (19), and a laminate member (G-PP-5) was manufactured.

### [Example 78]: Bonded Structure (78)

The two laminate members (G-PP-1) obtained in Example D-5 were bonded to each other by the (bonding method 7) and a bonded structure (78) was manufactured. The result is shown in Table 8.

### [Example 79]: Bonded Structure (79)

The two laminate members (G-PP-2) obtained in Example D-6 were bonded to each other by the (bonding method 7) and a bonded structure (79) was manufactured. The result is shown in Table 8.

### [Example 80]: Bonded Structure (80)

The two laminate members (G-PP-2) obtained in Example D-6 were bonded to each other by the (bonding method 6) and a bonded structure (80) was manufactured. The result is shown in Table 8.

### [Example 81]: Bonded Structure (81)

The two laminate members (G-PP-3) obtained in Example D-7 were bonded to each other by the (bonding method 6) and a bonded structure (81) was manufactured. The result is shown in Table 8.

### [Comparative Example 23]: Bonded Structure (C23)

The two glass fiber reinforced polypropylenes (G-PP manufactured by Nippon Testpanel Co., Ltd., dimension: width of 25 mm × length of 100 mm × thickness of 2 mm) were bonded to each other by the (bonding method 7) and a bonded structure (C23) was manufactured. The result is shown in Table 8.

### [Comparative Example 24]: Bonded Structure (C24)

The two glass fiber reinforced polypropylenes (G-PP manufactured by Nippon Testpanel Co., Ltd., dimension: width of 25 mm × length of 100 mm × thickness of 2 mm) were bonded to each other by the (bonding method 6) and a bonded structure (C24) was manufactured. The result is shown in Table 8.

### [Comparative Example 25]: Bonded Structure (C25)

The two laminate members (G-PP-4) obtained in Comparative Example D-3 were bonded to each other by the (bonding method 7) and a bonded structure (C25) was manufactured. The result is shown in Table 8.

### [Comparative Example 26]: Bonded Structure (C26)

The two laminate members (G-PP-5) obtained in Comparative Example D-4 were bonded to each other by the (bonding method 7) and a bonded structure (C26) was manufactured. The result is shown in Table 8.

**[Table 8]**

| | Laminate member | Bonding method | Surface treatment method of laminate member | Shear adhesiveness (MPa) | Fracture aspect |
|---|---|---|---|---|---|
| Example 78 | G-PP-1 | 7 | Thermal transfer surface-modifying sheet + Heating at temperature equal to or higher than (T - 50)°C (T: melting point of thermoplastic resin (°C)) | 8.1 | Adherend fracture |
| Example 79 | G-PP-2 | 7 | | 9.5 | |
| Example 80 | G-PP-2 | 6 | | 0.64 | Adhesive fracture |
| Example 81 | G-PP-3 | 6 | | 0.44 | |
| Comparative Example 23 | G-PP | 7 | Not treated | 0.03 | Boundary surface fracture |
| Comparative Example 24 | G-PP | 6 | | 0.03 | |
| Comparative Example 25 | G-PP-4 | 7 | Application of solution of material of easy adherence laver | 0.03 | |
| Comparative Example 26 | G-PP-5 | 7 | | 0.03 | |

### [Example E-1]: Laminate Member (C-PA6-1)

The thermal transfer surface-modifying sheet (6) was placed on a carbon fiber reinforced nylon 6 (C-PA6 manufactured by Sunwa Trading Corporation, dimension: width of 25 mm × length of 100 mm × thickness of 2 mm) so that the easy adherence layer side becomes the inner side, heating press (225°C × 1 min.) was performed, the easy adherence layer was heat-welded to the surface of carbon fiber reinforced nylon 6, the release sheet was removed, the surface treatment was performed, and a laminate member (C-PA6-1) was manufactured.

### [Example E-2]: Laminate Member (C-PA66-1)

The thermal transfer surface-modifying sheet (6) was placed on a carbon fiber reinforced nylon 66 (C-PA66 manufactured by Sunwa Trading Corporation, dimension: width of 25 mm × length of 100 mm × thickness of 2 mm) so that the easy adherence layer side becomes the inner side, heating press (265°C × 1 min.) was performed, the easy adherence layer was heat-welded to the surface of carbon fiber reinforced nylon 66, the release sheet was removed, the surface treatment was performed, and a laminate member (C-PA66-1) was manufactured.

### [Example E-3]: Laminate Member (C-PA6-2)

The surface treatment was performed in the same manner as in Example E-1, except that the thermal transfer surface-modifying sheet (6) was changed to the thermal transfer surface-modifying sheet (19), and a laminate member (C-PA6-2) was manufactured.

### [Example E-4]: Laminate Member (C-PA66-2)

The surface treatment was performed in the same manner as in Example E-2, except that the thermal transfer surface-modifying sheet (6) was changed to the thermal transfer surface-modifying sheet (19), and a laminate member (C-PA66-2) was manufactured.

### [Comparative Example E-1]: Laminate Member (C-PA6-3)

The resin (6) was dissolved in hot toluene (60°C) and cooled to room temperature, and a solution having a concentration of 5% by weight was prepared.

The carbon fiber reinforced nylon 6 (C-PA6 manufactured by Sunwa Trading Corporation, dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (C-PA6-3) was manufactured.

### [Comparative Example E-2]: Laminate Member (C-PA66-3)

The resin (6) was dissolved in hot toluene (60°C) and cooled to room temperature, and a solution having a concentration of 5% by weight was prepared.

The carbon fiber reinforced nylon 66 (C-PA66 manufactured by Sunwa Trading Corporation, dimension: width of 25 mm × length of 100 mm × thickness of 2 mm) was dipped in this solution having a concentration of 5% by weight and air-dried, drying was further performed with a constant temperature dryer at 100°C for 1 minute, the surface treatment was performed, and a laminate member (C-PA66-3) was manufactured.

### [Comparative Example E-3]: Laminate Member (C-PA6-4)

The surface treatment was performed in the same manner as in Comparative Example E-1, except that the resin (6) was changed to the resin (19), and a laminate member (C-PA6-4) was manufactured.

### [Comparative Example E-4]: Laminate Member (C-PA66-4)

The surface treatment was performed in the same manner as in Comparative Example E-2, except that the resin (6) was changed to the resin (19), and a laminate member (C-PA66-4) was manufactured.

### [Example 82]: Bonded Structure (82)

The two laminate members (C-PA6-1) obtained in Example E-1 were bonded to each other by the (bonding method 2) and a bonded structure (82) was manufactured. The result is shown in Table 9.

### [Example 83]: Bonded Structure (83)

The two laminate members (C-PA66-1) obtained in Example E-2 were bonded to each other by the (bonding method 2) and a bonded structure (83) was manufactured. The result is shown in Table 9.

### [Example 84]: Bonded Structure (84)

The two laminate members (C-PA6-2) obtained in Example E-3 were bonded to each other by the (bonding method 2) and a bonded structure (84) was manufactured. The result is shown in Table 9.

### [Example 85]: Bonded Structure (85)

The two laminate members (C-PA66-2) obtained in Example E-4 were bonded to each other by the (bonding method 2) and a bonded structure (85) was manufactured. The result is shown in Table 9.

### [Comparative Example 27]: Bonded Structure (C27)

The two carbon fiber reinforced nylon 6 (C-PA6 manufactured by Sunwa Trading Corporation, dimension: width of 25 mm × length of 100 mm × thickness of 2 mm) were bonded to each other by the (bonding method 2) and a bonded structure (C27) was manufactured. The result is shown in Table 9.

### [Comparative Example 28]: Bonded Structure (C28)

The two carbon fiber reinforced nylon 66 (C-PA66 manufactured by Sunwa Trading Corporation, dimension: width of 25 mm × length of 100 mm × thickness of 2 mm) were bonded to each other by the (bonding method 2) and a bonded structure (C28) was manufactured. The result is shown in Table 9.

### [Comparative Example 29]: Bonded Structure (C29)

The two laminate members (C-PA6-3) obtained in Comparative Example E-1 were bonded to each other by the (bonding method 2) and a bonded structure (C29) was manufactured. The result is shown in Table 9.

### [Comparative Example 30]: Bonded Structure (C30)

The two laminate members (C-PA66-3) obtained in Comparative Example E-2 were bonded to each other by the (bonding method 2) and a bonded structure (C30) was manufactured. The result is shown in Table 9.

### [Comparative Example 31]: Bonded Structure (C31)

The two laminate members (C-PA6-4) obtained in Comparative Example E-3 were bonded to each other by the (bonding method 2) and a bonded structure (C31) was manufactured. The result is shown in Table 9.

### [Comparative Example 32]: Bonded Structure (C32)

The two laminate members (C-PA66-4) obtained in Comparative Example E-4 were bonded to each other by the (bonding method 2) and a bonded structure (C32) was manufactured. The result is shown in Table 9.

**[Table 9]**

| | Laminate member | Bonding method | Surface treatment method of laminate member | Shear adhesiveness (MPa) | Fracture aspect |
|---|---|---|---|---|---|
| Example 82 | C-PA6-1 | 2 | Thermal transfer surface-modifying sheet + Heating at temperature equal to or higher than (T - 50)°C (T: melting point of thermoplastic resin (°C)) | 35.5 | Adhesive fracture |
| Example 83 | C-PA66-1 | 2 | | 27.3 | |
| Example 84 | C-PA6-2 | 2 | | 36.1 | Adherend fracture |
| Example 85 | C-PA66-2 | 2 | | 36.0 | |
| Comparative Example 27 | C-PA6 | 2 | Not treated | 19.5 | Boundary surface fracture |
| Comparative Example 28 | C-PA66 | 2 | | 20.0 | |
| Comparative Example 29 | C-PA6-3 | 2 | Application of solution of material of easy adherence layer | 23.2 | |
| Comparative Example 30 | C-PA66-3 | 2 | | 21.58 | |
| Comparative Example 31 | C-PA6-4 | 2 | | 11.58 | |
| Comparative Example 32 | C-PA66-4 | 2 | | 10.18 | |

### <<Simulation>>

### (Method)

A mutual diffusion structure of respective molecules in a boundary surface where an ethylene-glycidyl methacrylate copolymer is in contact with polyphenylene sulfide was analyzed by the following method, by using software (Materials Studio 2017) manufactured by DASSAULT SYSTEMES and a molecular dynamic simulator (LAMMPS). The number of atoms of the respective polymer used in the simulation was set as 5100 to 5150 (approximately 50,000 in terms of molecular weight of PPS), an ethylene-glycidyl methacrylate copolymer model was set as a random copolymer formed of 81% by weight of an ethylene unit and 19% by weight of a glycidyl methacrylate unit.

First, molecular dynamics calculation of NVT ensemble using a COMPASS force field was performed regarding the respective polymers at 300°C for 3 ns by using software (Materials Studio 2017), and a polymer model in an aggregated state was created. These polymer models were put to be superimposed in a c axis direction so that these are not in contact with a unit cell having a rectangular parallelepiped shape (cell parameter: a = b = 4.9 nm, c = 16 nm, α = β = γ = 90°C), a structure optimization calculation by molecular mechanics using a COMPASS force field was performed, the unit cell was gradually contracted under three-dimensional boundary conditions, and a model having density of 0.5 g/cm³ was obtained. Then, regarding this unit cell model, the molecular dynamics calculation of NPT ensemble under the conditions of 25°C and 1 atm to 100 atm was performed by using a molecular dynamic simulator (LAMMPS) for 10 ns or longer, and a energetically stable boundary surface model in which an ethylene-glycidyl methacrylate copolymer and a polyphenylene sulfide are thoroughly in contact with each other under the conditions of 25°C and 1 atm, was finally obtained. Next, regarding this boundary surface model, the molecular dynamics calculation of NPT ensemble at 300°C was performed for 90 ns to 100 ns by using LAMMPS, and a change of the boundary surface structure due to heating from 25°C to 300°C was analyzed. In the calculation with the LAMMPS, Dreiding was used for a molecular force field.

### (Result 1)

In a case where heating was performed at 300°C for 10 ns, a thickness of a mixed layer of an ethylene-glycidyl methacrylate copolymer and a polyphenylene sulfide was 1.5 nm.

### (Result 2)

In a case where heating was performed at 300°C for 100 ns, a thickness of a mixed layer of an ethylene-glycidyl methacrylate copolymer and a polyphenylene sulfide was 2.0 nm.

### (Result 3)

In a case where heating was performed at 25°C for 10 ns, a thickness of a mixed layer of an ethylene-glycidyl methacrylate copolymer and a polyphenylene sulfide was 0.8 nm.

### (Result 4)

In a case where heating was performed at 25°C for 100 ns, a thickness of a mixed layer of an ethylene-glycidyl methacrylate copolymer and a polyphenylene sulfide was 0.9 nm.

### (Reference)

From the result 1 and the result 2, it was determined that, in a case where the heating time is increased in the heating at 300°C, the thickness of the mixed layer significantly increases (1.5 nm to 2.0 nm). On the other hand, from the result 3 and the result 4, it was determined that, even in a case where the heating time is increased in the heating at 25°C, a significant decrease in thickness of the mixed layer is not observed (a difference of only 0.1 nm is observed from 0.8 nm to 0.9 nm and this was in a range of a variation of head).

The method for manufacturing a surface-modified thermoplastic resin of the present invention, the method for manufacturing a bonded structure, the bonded structure, the thermal transfer surface-modifying sheet, the thermoplastic resin with a thermal transfer surface-modifying sheet, and the surface-modified thermoplastic resin can be suitably used in fields of railroad vehicles, aeroplanes, ships, and vehicles.

### Reference Signs List

10 easy adherence layer
20 release sheet
100 thermoplastic resin
200 thermal transfer surface-modifying sheet
300 adhesive layer
500 surface-modified thermoplastic resin
800 thermoplastic resin with thermal transfer surface-modifying sheet
1000 bonded structure

## Claims

1. A method for manufacturing a surface-modified thermoplastic resin (500), in which an easy adherence layer (10) is laminated on a thermoplastic resin (100) having a melting point of T°C, the method comprising:
providing the easy adherence layer (10) on at least a part of a surface of the thermoplastic resin (100); and
performing heat welding at a temperature equal to or higher than (T - 50)°C, wherein the heat welding is performed by a heating press,
wherein a molding process of the thermoplastic resin (100) is performed by the heating press,
wherein the easy adherence layer (10) includes a polymer component,
wherein the easy adherence layer (10) is provided by placing a side of the easy adherence layer (10) of a thermal transfer surface-modifying sheet (200) that is a laminate comprising a release sheet (20) and the easy adherence layer (10), on at least a part of the surface of the thermoplastic resin (100),
**characterized in that** the polymer component includes a non-polar unit and a polar unit including a polar group.

2. The manufacturing method according to claim 1,
wherein the release sheet (20) is removed after the heat welding.

## Patentansprüche

1. Verfahren zur Herstellung eines oberflächenmodifizierten thermoplastischen Harzes (500), bei dem eine leicht haftende Schicht (10) auf ein thermoplastisches Harz (100) mit einem Schmelzpunkt von T°C laminiert ist, wobei das Verfahren umfasst:
das Bereitstellen der leicht haftenden Schicht (10) auf mindestens einem Teil einer Oberfläche des thermoplastischen Harzes (100); und
das Durchführen von Wärmeschweißen bei einer Temperatur gleich oder höher als (T - 50)°C,
wobei das Wärmeschweißen durch eine Heizpresse durchgeführt wird,
wobei ein Formungsverfahren des thermoplastischen Harzes (100) durch die Heizpresse durchgeführt wird,
wobei die leicht haftende Schicht (10) einen Polymerbestandteil enthält,
wobei die leicht haftende Schicht (10) bereitgestellt wird, indem eine Seite der leicht haftenden Schicht (10) einer oberflächenmodifizierenden Thermotransferfolie (200), die ein Laminat ist, das eine Trennfolie (20) und die leicht haftende Schicht (10) umfasst, auf mindestens einen Teil der Oberfläche des thermoplastischen Harzes (100) gelegt wird,
**dadurch gekennzeichnet, dass** der Polymerbestandteil eine unpolare Einheit und eine polare Einheit mit einer polaren Gruppe enthält.

2. Herstellungsverfahren nach Anspruch 1,
wobei die Trennfolie (20) nach dem Wärmeschweißen entfernt wird.

## Revendications

1. Procédé de fabrication d'une résine thermoplastique modifiée en surface (500), dans lequel une couche d'adhérence facile (10) est stratifiée sur une résine thermoplastique (100) ayant un point de fusion de T °C, le procédé comprenant :
fournir la couche d'adhérence facile (10) sur au moins une partie d'une surface de la résine thermoplastique (100) ; et
réaliser une thermosoudure à une température supérieure ou égale à (T - 50) °C, dans lequel la thermosoudure est réalisée par une presse à chaud, dans lequel un processus de moulage de la résine thermoplastique (100) est réalisé par la presse à chaud,
dans lequel la couche d'adhérence facile (10) inclut un composant polymère,
dans lequel la couche d'adhérence facile (10) est fournie en plaçant un côté de la couche d'adhérence facile (10) d'une feuille de transfert thermique à modification de surface (200) qui est un stratifié comprenant une feuille de libération (20) et la couche d'adhérence facile (10), sur au moins une partie de la surface de la résine thermoplastique (100),
**caractérisé en ce que** le composant polymère inclut une unité non polaire et une unité polaire incluant un groupe polaire.

2. Procédé de fabrication selon la revendication 1,
dans lequel la feuille de libération (20) est retirée après la thermosoudure.
